(19) **Europäisches Patentamt / European Patent Office / Office européen des brevets**

(11) **EP 4 787 928 A1**

(12) **EUROPEAN PATENT APPLICATION**
published in accordance with Art. 153(4) EPC

(43) Date of publication:
**05.08.2026  Bulletin 2026/32**

(21) Application number: **24870646.7**

(22) Date of filing: **23.09.2024**

(51) International Patent Classification (IPC):
**H04W 24/02** $^{(2009.01)}$

(52) Cooperative Patent Classification (CPC):
**H04W 24/02; H04W 24/10**

(86) International application number:
**PCT/CN2024/120348**

(87) International publication number:
**WO 2025/067102 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.09.2023  CN 202311292698**

(71) Applicant: **HUAWEI TECHNOLOGIES CO., LTD. Shenzhen 518129 (CN)**

(72) Inventors:
• **LI, Jie**
  **Shenzhen, Guangdong 518129 (CN)**
• **PENG, Wenjie**
  **Shenzhen, Guangdong 518129 (CN)**
• **ZHENG, Lili**
  **Shenzhen, Guangdong 518129 (CN)**

(74) Representative: **Epping - Hermann - Fischer Patentanwaltsgesellschaft mbH Schloßschmidstraße 5 80639 München (DE)**

(54) **COMMUNICATION METHOD AND COMMUNICATION APPARATUS**

(57)    This application provides a communication method and a communication apparatus. The method includes: A network device sends configuration information including M measurement events to a terminal device. The terminal device sends a first measurement report of a target measurement event to the network device when determining that a first measurement result satisfies trigger conditions for a plurality of measurement events in the M measurement events. This technical solution can prevent the terminal device from repeatedly sending a plurality of measurement reports to the network device, thereby reducing signaling overheads.

300

Terminal device

Network device

310: First configuration information, where the first configuration information includes M first measurement events

320: Send a first measurement report when determining that a first measurement result satisfies trigger conditions for N first measurement events in the M first measurement events

330: Make a decision based on the first measurement report

FIG. 3

## Description

This application claims priority to Chinese Patent Application No. 202311292698.4, filed with the China National Intellectual Property Administration on September 28, 2023 and entitled "COMMUNICATION METHOD AND COMMUNICATION APPARATUS", which is incorporated herein by reference in its entirety.

## TECHNICAL FIELD

Embodiments of this application relate to the communication field, and more specifically, to a communication method and a communication apparatus.

## BACKGROUND

A network device may configure some configuration information for a terminal device, for example, measurement report configuration information, so that the terminal device can perform a corresponding measurement event based on the measurement report configuration information when a trigger condition is satisfied, and report a corresponding measurement report to the network device.

For example, in a possible implementation, an event H1 may be expressed as follows: When an aerial altitude of an uncrewed aerial vehicle is greater than a threshold A, the uncrewed aerial vehicle performs a measurement event, for example, measures signal quality, and reports, to the network device, a measurement report corresponding to the measurement event. An event H2 may be expressed as follows: When the aerial altitude of the uncrewed aerial vehicle is less than a threshold B, the uncrewed aerial vehicle performs a measurement event, and reports, to the network device, a measurement report corresponding to the measurement event.

When the network configuration configures a plurality of measurement events for the uncrewed aerial vehicle, for example, the network device configures a plurality of events H1 and/or a plurality of events H2 for the uncrewed aerial vehicle, if the uncrewed aerial vehicle is at a specific altitude A when accessing a network, or the network device reconfigures the events H1 and/or the events H2 for the uncrewed aerial vehicle at a specific altitude A, if the altitude A is greater than thresholds corresponding to the plurality of events H1 or the altitude A is less than thresholds corresponding to the plurality of events H2, the altitude A satisfies thresholds corresponding to the plurality of measurement events, which triggers the uncrewed aerial vehicle to perform the plurality of measurement events and report a plurality of measurement reports to the network device. Consequently, the uncrewed aerial vehicle repeatedly reports the measurement reports the uncrewed aerial vehicle, causing additional signaling overheads.

Therefore, preventing the uncrewed aerial vehicle from repeatedly reporting the measurement reports has become a problem to be resolved.

## SUMMARY

This application provides a communication method and a communication apparatus, to avoid a case in which an uncrewed aerial vehicle repeatedly reports measurement reports.

According to a first aspect, a communication method is provided. The method is applied to a terminal device, and the method includes: receiving first configuration information from a network device, where the first configuration information includes M first measurement events, and the first measurement event includes a first measurement result and a first threshold; and sending K first measurement reports when determining that the first measurement result satisfies trigger conditions for N first measurement events in the M first measurement events, where the K first measurement reports are measurement reports corresponding to K first measurement events in the N first measurement events, N is greater than or equal to 2, and K is less than or equal to 2. Optionally, when K is equal to 2, the N first measurement events include different types of measurement events, N is greater than or equal to 3, and the K first measurement reports are measurement reports corresponding to the different types of measurement events.

Optionally, when the first measurement result satisfies the trigger conditions for the N first measurement events in the M first measurement events, the terminal device may further send the K first measurement reports without a determining action.

Based on this embodiment of this application, when the first measurement result satisfies the trigger conditions for the N first measurement events in the M first measurement events, the terminal device sends, to the network device, a measurement report corresponding to one of the measurement events or one measurement report of each type. In this way, a case in which the terminal device repeatedly sends measurement reports to the network device can be avoided, so that signaling overheads are reduced.

In an implementation, when K=1, the sending the K first measurement reports includes: obtaining N measurement reports corresponding to the N first measurement events, where each first measurement event corresponds to one measurement report; and sending one first measurement report that is in the N measurement reports and that corresponds to a first trigger condition that the first measurement result satisfies, where the first trigger condition is one of the trigger conditions that the N first measurement events satisfy.

Based on this embodiment of this application, although the terminal device obtains a plurality of measurement reports through measurement, the terminal device needs to select only one measurement report to be reported to the network device. In this way, repeated reporting of the plurality of measurement reports can be avoided, so that the signaling overheads are reduced.

In an implementation, when K=1, the sending the K first measurement reports includes: obtaining the first measurement report corresponding to a first trigger condition that the first measurement result satisfies, where the first trigger condition is one of the trigger conditions that the N first measurement events satisfy; and sending one first measurement report corresponding to the first trigger condition that the first measurement result satisfies.

Based on this embodiment of this application, the terminal device needs to perform only one measurement event, and sends a measurement report of the measurement event to the network device. In this way, repeated reporting of a plurality of measurement reports can be avoided, so that the signaling overheads are reduced.

In an implementation, when K=2, the sending the K first measurement reports includes: obtaining N measurement reports corresponding to the N first measurement events, where each first measurement event corresponds to one measurement report; and sending the K first measurement reports that are in the N measurement reports and that correspond to a first trigger condition that the first measurement result satisfies, where the first trigger condition is one of trigger conditions that each type in the different types of measurement events satisfies.

Based on this embodiment of this application, because the N first measurement events include the different types of measurement events (for example, an event H1 and an event H2), the terminal device may report one measurement report to the network device for each type, so that repeated reporting of measurement reports of each type of measurement events can be avoided.

In an implementation, when K=2, the sending the K first measurement reports includes: obtaining the K first measurement reports corresponding to a first trigger condition that the first measurement result satisfies, where the first trigger condition is one of trigger conditions that each type in the different types of measurement events satisfies; and sending the K first measurement reports corresponding to the first trigger condition that the first measurement result satisfies.

Based on this embodiment of this application, the terminal device needs to perform only one measurement event of each type, and reports one measurement report of the type, so that repeated reporting of measurement reports of each type of measurement events can be avoided.

In an implementation, the first trigger condition may include one of the following conditions:

a first threshold that is in N first thresholds corresponding to the N first measurement events and that is closest to a flight altitude at which the terminal device performs measurement;
a largest first threshold in N first thresholds corresponding to the N first measurement events;
a smallest first threshold in N first thresholds corresponding to the N first measurement events;
a first threshold corresponding to a trigger condition with earliest configuration time; or
a first threshold corresponding to a trigger condition with a highest priority.

In an implementation, the first measurement result includes altitude information or altitude difference information.

In an implementation, the first measurement event further includes one or more second thresholds; and the sending the K first measurement reports includes: when determining that the first measurement result satisfies the N first thresholds corresponding to the N first measurement events and that one or more second measurement results satisfy the second threshold, sending the K first measurement reports.

Based on this embodiment of this application, the terminal device sends the measurement report to the network device when determining that the first measurement result (for example, an altitude) satisfies the first thresholds and that the second measurement result (for example, signal strength) satisfies the second threshold. In this technical solution, the terminal device can adjust a threshold of a measurement event based on the altitude, to adapt to actual requirements of different strength of signals received by the terminal device at different altitudes.

In an implementation, the second measurement result is signal strength, and that the one or more second measurement results satisfy the second threshold includes one of the following content: signal strength of a neighboring cell is greater than signal strength of a serving cell of the terminal device; signal strength of a neighboring cell is greater than a first value; or signal strength of a serving cell is less than a second value, and signal strength of a neighboring cell is greater than a third value.

It should be understood that the neighboring cell may be a cell neighboring to the serving cell of the terminal device. In an implementation, before sending the K first measurement reports, the method further includes: applying a first measurement configuration, where the first measurement configuration includes a correspondence between a third threshold and first information.

For example, the first measurement configuration may be included in the first configuration information.

In an implementation, the third threshold is an altitude threshold, and the first information includes a triggered-cell quantity and/or a to-be-measured beam.

In an implementation, when the first measurement configuration includes a plurality of third thresholds, the applying the first measurement configuration includes one of the following content: applying first information corresponding to a third threshold in the plurality of third thresholds that is closest to the flight altitude at which the terminal device performs measurement; applying first information corresponding to a largest first threshold in the plurality of third thresholds; applying first information corresponding to a smallest first threshold in the plurality of third thresholds; first information corresponding to a third threshold with earliest configuration time; or first information corresponding to a third threshold with a highest priority.

Based on this embodiment of this application, the terminal device can determine first information corresponding to an altitude threshold.

In an implementation, the sending the K first measurement reports includes: when determining that the first measurement result satisfies the N first thresholds corresponding to the N first measurement events and that a quantity of cells in a triggered-cell list is greater than or equal to the triggered-cell quantity, and/or when the first measurement result satisfies the N first thresholds corresponding to the N first measurement events, measuring the to-be-measured beam, and sending the K first measurement reports.

It should be understood that, when a quantity of cells in a triggered-cell list is less than the triggered-cell quantity, and/or when the terminal device has not measured the to-be-measured beam, the terminal device does not report the first measurement report to the network device.

Based on this embodiment of this application, when the first information includes the triggered-cell quantity, the terminal device may report the first measurement report when the altitude satisfies the threshold and a quantity of measured cells is greater than the triggered-cell quantity, so that the signaling overheads can be reduced. When the first information includes the to-be-measured beam, the terminal device measures the to-be-measured beam when the altitude satisfies the threshold, and then reports the first measurement report, so that the terminal device is applicable to requirements of different communication environments at different altitudes.

In an implementation, the first threshold includes one of the following content: an altitude threshold corresponding to the first measurement event; a sum of an altitude threshold corresponding to the first measurement event and a hysteresis value, or a difference of the altitude threshold corresponding to the first measurement event minus the hysteresis value; a sum of an altitude threshold corresponding to the first measurement event and an offset value; or a sum of an altitude threshold corresponding to the first measurement event and an offset value, plus a hysteresis value; or the sum of the altitude threshold corresponding to the first measurement event and the offset value, minus the hysteresis value.

In an implementation, the first measurement report further includes the flight altitude at which the terminal device performs measurement.

Based on this embodiment of this application, the first measurement report carries the flight altitude at which the terminal device performs measurement. This helps the network device determine the altitude of the terminal device, thereby determining some current information of the terminal device based on the altitude.

In an implementation, the first configuration information is initially configured configuration information or reconfigured configuration information.

Based on this embodiment of this application, when the first configuration information is the initially configured configuration information or the reconfigured configuration information, the terminal device may be enabled to report a measurement report to the network device once, to avoid a case in which the terminal device does not report the measurement report to the network device.

In an implementation, the first configuration information further includes first indication information, and the first indication information indicates the terminal device to determine the first trigger condition.

Based on this embodiment of this application, the first configuration information carries the first indication information indicating the terminal device to determine the first trigger condition, so that the terminal device can determine a specific measurement event whose measurement report is to be reported.

In an implementation, the determining the first trigger condition includes: if the N first measurement events are a same type of first measurement events, determining, based on the first indication information, to use one of the trigger conditions that the N first measurement events satisfy as the first trigger condition.

For example, the N first measurement events are N events H1, or the N first measurement events are N events H2.

Based on this embodiment of this application, the terminal device may determine, based on the first indication information, the specific measurement event whose measurement report is to be reported.

In an implementation, the determining the first trigger condition includes: if the N measurement events are different types of first measurement events, determining, based on the first indication information, to use one of the trigger conditions that the N first measurement events satisfy as the first trigger condition.

For example, the N first measurement events include both the event H1 and the event H2.

Based on this embodiment of this application, the terminal device may determine, based on the first indication information, the specific measurement event whose measurement report is to be reported.

In an implementation, the determining the first trigger condition includes: if the N measurement events are one or more first-type first measurement events and one or more second-type first measurement events, determining, based on the first indication information, to use the first threshold closest to the flight altitude at which the terminal device performs measurement as the first trigger condition; determining, based on the first indication information, to use one of trigger conditions that the one or more first-type first measurement events satisfy as the first trigger condition; determining, based on the first indication information, to use one of trigger conditions that the one or more second-type first measurement events satisfy as the first trigger condition; or determining, based on the first indication information, to use one of trigger conditions that the one or more first-type first measurement events satisfy and one of trigger conditions that the one or more second-type first measurement events satisfy as the first trigger condition.

Based on this embodiment of this application, the terminal device may determine, based on the first indication information, the specific measurement event whose measurement report is to be reported.

In an implementation, when the first configuration information includes the M first measurement events, the first configuration information further includes the first indication information.

Based on this embodiment of this application, when the first configuration information includes the M first measurement events, the first configuration information additionally carries the first indication information, so that the terminal device can determine, based on the first indication information, the specific measurement event whose measurement report is to be reported.

In an implementation, the first configuration information further includes second indication information, and the second indication information indicates the terminal device to determine, based on relationships between altitude difference information per unit time and the first thresholds, that the first measurement result satisfies the trigger conditions for the N first measurement events.

Optionally, the altitude difference information is an altitude difference within preset time.

Based on this embodiment of this application, the terminal device may determine, based on the second indication information, that the first measurement result satisfies the trigger conditions for the measurement events.

According to a second aspect, a communication method is provided. The method is applied to a network device, and the method includes: sending first configuration information to a terminal device, where the first configuration information includes M first measurement events, and the first measurement event includes a first threshold; and receiving K first measurement reports, where the K first measurement reports are measurement reports corresponding to K first measurement events in N first measurement events in the M first measurement events that a first measurement result satisfies, N is greater than or equal to 2, and K is less than or equal to 2. Optionally, when K is equal to 2, the N first measurement events include different types of measurement events, N is greater than or equal to 3, and the K first measurement reports are measurement reports corresponding to the different types of measurement events.

Based on this embodiment of this application, the network device may configure the first configuration information for the terminal device, so that the terminal device can report, to the network device when an altitude satisfies a plurality of thresholds, a measurement report corresponding to one measurement event or a measurement report corresponding to one measurement event of each type. In this way, a case in which the terminal device repeatedly sends measurement reports to the network device can be avoided, so that signaling overheads of the terminal device and the network device are reduced.

In an implementation, the first measurement result includes altitude information.

Optionally, the first measurement result may alternatively be altitude difference information, for example, may be altitude difference information within preset time.

In an implementation, the first measurement event further includes one or more second thresholds.

Based on this embodiment of this application, the terminal device sends the measurement report to the network device when determining that the first measurement result (for example, an altitude) satisfies first thresholds and that a second measurement result (for example, signal strength) satisfies the second threshold. In this technical solution, the terminal device can adjust a threshold of a measurement event based on the altitude, to adapt to actual requirements of different strength of signals received by the terminal device at different altitudes.

In an implementation, the first configuration information further includes a first measurement configuration, and the first measurement configuration includes a correspondence between a third threshold and first information.

In an implementation, the third threshold is an altitude threshold, and the first information includes a triggered-cell quantity and/or a to-be-measured beam.

In an implementation, the first threshold includes one of the following content: an altitude threshold corresponding to the first measurement event; a sum of an altitude threshold corresponding to the first measurement event and a hysteresis value, or a difference of the altitude threshold corresponding to the first measurement event minus the hysteresis value; a sum of an altitude threshold corresponding to the first measurement event and an offset value; or a sum of an altitude threshold corresponding to the first measurement event and an offset value, plus a hysteresis value; or the sum of the altitude threshold corresponding to the first measurement event and the offset value, minus the hysteresis value.

In an implementation, the first measurement report further includes a flight altitude at which the terminal device performs measurement.

Based on this embodiment of this application, the first measurement report carries the flight altitude at which the terminal device performs measurement. This helps the network device determine the altitude of the terminal device, thereby determining some current information of the terminal device based on the altitude.

In an implementation, the first configuration information is initially configured configuration information or reconfigured configuration information.

Based on this embodiment of this application, when the first configuration information is the initially configured configuration information or the reconfigured configuration information, the terminal device may be enabled to report a measurement report to the network device once, to avoid a case in which the terminal device does not report the measurement report to the network device.

In an implementation, the first configuration information further includes first indication information, the first indication information indicates the terminal device to determine a first trigger condition, and the first trigger condition is a trigger condition corresponding to sending the K first measurement events by the terminal.

Based on this embodiment of this application, the first configuration information carries the first indication information indicating the terminal device to determine the first trigger condition, so that the terminal device can determine a specific measurement event whose measurement report is to be reported.

In an implementation, if the N first measurement events are a same type of first measurement events, the first indication information indicates the terminal device to use one of trigger conditions that the N first measurement events satisfy as the first trigger condition.

Based on this embodiment of this application, this helps the terminal device determine, based on the first indication information, the specific measurement event whose measurement report is to be reported.

In an implementation, if the N measurement events are different types of first measurement events, the first indication information indicates the terminal device to use one of trigger conditions that the N first measurement events satisfy as the first trigger condition.

Based on this embodiment of this application, this helps the terminal device determine, based on the first indication information, the specific measurement event whose measurement report is to be reported.

In an implementation, if the N measurement events are one or more first-type first measurement events and one or more second-type first measurement events, the first indication information indicates the terminal device to use a first threshold closest to a flight altitude at which the terminal device performs measurement as the first trigger condition; the first indication information indicates the terminal device to use one of trigger conditions that the one or more first-type first measurement events satisfy as the first trigger condition; the first indication information indicates the terminal device to use one of trigger conditions that the one or more second-type first measurement events satisfy as the first trigger condition; or the first indication information indicates the terminal device to use one of trigger conditions that the one or more first-type first measurement events satisfy and one of trigger conditions that the one or more second-type first measurement events satisfy as the first trigger condition.

Based on this embodiment of this application, this helps the terminal device determine, based on the first indication information, the specific measurement event whose measurement report is to be reported.

In an implementation, the first configuration information further includes second indication information, and the second indication information indicates the terminal device to determine, based on relationships between altitude difference information per unit time and the first thresholds, that the first measurement result satisfies the trigger conditions for the N first measurement events.

Optionally, the altitude difference information is an altitude difference within the preset time.

Based on this embodiment of this application, the terminal device may determine, based on the second indication information, that the first measurement result satisfies the trigger conditions for the measurement events.

According to a third aspect, a communication method is provided. The method is applied to a terminal device, and the method includes: receiving second configuration information from a network device, where the second configuration information includes a target measurement event, and the target measurement event is a measurement event triggered based on a relationship between altitude difference information and threshold information; and when the target measurement event satisfies a trigger condition, sending a measurement report of the target measurement event.

Based on this embodiment of this application, the terminal device may receive the second configuration information of the network device, where the second configuration information includes the target measurement event triggered based on the relationship between the altitude difference information and the threshold information, so that when the target measurement event satisfies the trigger condition, the terminal device can send the measurement report of the target measurement event, to avoid a case in which the terminal device repeatedly reports measurement reports to the network device.

In an implementation, the target measurement event includes a second measurement event and/or a third measurement event, the second measurement event is a measurement event triggered when an altitude difference of the terminal device is greater than a first threshold, and the third measurement event is a measurement event triggered when the altitude difference of the terminal device is less than a second threshold.

Based on this embodiment of this application, the second measurement event is the measurement event triggered when the altitude difference of the terminal device is greater than the first threshold, and may be understood as a measurement event of the terminal device in an ascending process. The third measurement event is the measurement event triggered when the altitude difference of the terminal device is less than the second threshold, and may be understood as a measurement event of the terminal device in a descending process. In this technical solution, the measurement report may be reported when the condition is satisfied in the ascending or descending process of the terminal device.

In an implementation, the altitude difference information is a difference of a first altitude minus a second altitude of the terminal device, the first altitude is an altitude of the terminal device at a first moment, and the second altitude is an altitude of the terminal device at a second moment.

This technical solution helps the terminal device determine the altitude difference information of the terminal device. In an implementation, the second configuration information includes the second altitude, or the second altitude is an altitude at which the terminal device receives the second configuration information.

When the second configuration information includes the second altitude, the second altitude may be a default value, for example, 10 meters or 5 meters.

In an implementation, the altitude difference information is an altitude difference per unit time. This makes the target measurement event triggered more accurately, and prevents the terminal device from reporting the measurement report when the foregoing trigger condition is satisfied at any moment.

According to a fourth aspect, a communication method is provided. The method is applied to a network device, and the method includes: sending second configuration information to a terminal device, where the second configuration information includes a target measurement event, and the target measurement event is a measurement event triggered based on a relationship between altitude difference information and a first threshold; and receiving a measurement report of the target measurement event from the terminal device.

Based on this embodiment of this application, the network device may send the second configuration information to the terminal device, where the second configuration information includes the target measurement event triggered based on a relationship between the altitude difference information and threshold information, so that when the target measurement event satisfies a trigger condition, the network device can receive the measurement report of the target measurement event, avoiding repeatedly receiving measurement reports of the terminal device.

In an implementation, the target measurement event includes a second measurement event and/or a third measurement event, the second measurement event

event is a measurement event triggered when an altitude difference of the terminal device is greater than the first threshold, and the third measurement event is a measurement event triggered when the altitude difference of the terminal device is less than a second threshold.

Based on this embodiment of this application, the second measurement event is the measurement event triggered when the altitude difference of the terminal device is greater than the first threshold, and may be understood as a measurement event of the terminal device in an ascending process. The third measurement event is the measurement event triggered when the altitude difference of the terminal device is less than the second threshold, and may be understood as a measurement event of the terminal device in a descending process. In this technical solution, the measurement report may be reported when the condition is satisfied in the ascending or descending process of the terminal device.

In an implementation, the altitude difference information is a difference of a first altitude minus a second altitude of the terminal device, the first altitude is an altitude of the terminal device at a first moment, and the second altitude is an altitude of the terminal device at a second moment.

In an implementation, the second configuration information includes the second altitude, or the second altitude is an altitude at which the terminal device receives the second configuration information.

In an implementation, the altitude difference information is an altitude difference per unit time. This makes the target measurement event triggered more accurately, and prevents the terminal device from reporting the measurement report when the foregoing trigger condition is satisfied at any moment.

According to a fifth aspect, a communication method is provided. The method is applied to a terminal device, and the method includes: receiving second information from a network device, where the second information indicates a type of a communication mode supported by the network device, and the type of the communication mode includes a first communication mode and/or a second communication mode; and communicating with another terminal device in a target communication mode based on the second information, where the target communication mode is the first communication mode and/or the second communication mode.

Based on this embodiment of this application, the terminal device may receive the second information that is sent by the network device and that indicates the type of the communication mode supported by the network device, so that the terminal device can determine, based on the second information, the mode of communicating with the another terminal device.

In an implementation, the second information is indication information indicating the type of the communication mode supported by the network device, and/or the second information is configuration information of a resource pool of the communication mode supported by the network device.

Based on this embodiment of this application, the second information may be the indication information, or may be the configuration information. Alternatively, and the second information may include both the indication information and the configuration information, so that flexibility of sending capability information by the network device can be improved.

In an implementation, the second information includes indication information indicating that the network device supports the first communication mode, and includes configuration information of a resource pool of the first communication mode, and communicating with the another terminal device in the target communication mode based on the second information includes: communicating with the another terminal device in the resource pool of the first communication mode in the first communication mode based on the second information.

Based on this embodiment of this application, the terminal device may determine, based on the second information, to communicate with the another terminal device in the resource pool of the first communication mode in the first communication mode.

In an implementation, the second information includes indication information indicating that the network device supports the first communication mode, and includes configuration information of a resource pool of the second communication mode, and communicating with the another terminal device in the target communication mode based on the second information includes: communicating with the another terminal device in the resource pool of the second communication mode in the first communication mode based on the second information.

Based on this embodiment of this application, the terminal device may determine, based on the second information, to communicate with the another terminal device in the resource pool of the second communication mode in the first communication mode.

In an implementation, the second information includes indication information indicating that the network device supports the second communication mode, and includes configuration information of a resource pool of the second communication mode, and communicating with the another terminal device in the target communication mode based on the second information includes: communicating with the another terminal device in the resource pool of the second communication mode in the second communication mode based on the second information.

Based on this embodiment of this application, the terminal device may determine, based on the second information, to communicate with the another terminal device in the resource pool of the second communication mode in the second communication mode.

In an implementation, the first communication mode is aircraft to everything A2X, and the second communication mode is vehicle to everything V2X.

Optionally, the first communication mode and the second communication mode may alternatively be other communication modes. This is not limited in this embodiment of this application.

According to a sixth aspect, a communication method is provided. The method is applied to a network device, and the method includes: sending second information, where the second information indicates a type of a communication mode supported by the network device, and the type of the communication mode includes a first communication mode and/or a second communication mode.

Based on this embodiment of this application, the network device may send, to a terminal device, the second information indicating the type of the communication mode supported by the network device, so that the terminal device can determine, based on the second information, a mode of communicating with another terminal device.

In an implementation, the second information is indication information indicating the type of the communication mode supported by the network device, and/or the second information is configuration information of a resource pool of the communication mode supported by the network device.

Based on this embodiment of this application, the second information may be the indication information, or may be the configuration information. Alternatively, and the second information may include both the indication information and the configuration information, so that flexibility of sending capability information by the network device can be improved.

In an implementation, the first communication mode is aircraft to everything A2X, and the second communication mode is vehicle to everything V2X.

According to a seventh aspect, a communication apparatus is provided. The apparatus is configured to perform the methods according to the first aspect to the sixth aspect. Specifically, the apparatus may include a unit and/or a module configured to perform the method according to any one of the implementations of the first aspect to the sixth aspect, for example, a processing unit and/or a transceiver unit.

In an implementation, a communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit in a communication apparatus. When the apparatus is a chip, a chip system, or a circuit used in a terminal device, a communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to an eighth aspect, a communication apparatus is provided. The apparatus includes: a memory, configured to store a program; and at least one processor, configured to execute the computer program or instructions stored in the memory, to perform any one of the implementations of first aspect to the sixth aspect.

According to a ninth aspect, a processor is provided, and is configured to perform the methods according to the foregoing aspects.

Operations such as sending and obtaining/receiving related to the processor may be understood as operations such as output and receiving or input of the processor, or sending and receiving operations performed by a radio frequency circuit and an antenna, unless otherwise stated, or provided that the operations do not contradict actual functions or internal logic of the operations in related descriptions. This is not limited in this application.

According to a tenth aspect, a computer-readable storage medium is provided. The computer-readable medium stores program code executed by a device, and the program code includes instructions for performing the method according to any one of the implementations of the first aspect to the sixth aspect.

According to an eleventh aspect, a computer program product including instructions is provided. When the computer program product runs on a computer, the computer is caused to perform the method according to any one of the implementations of the first aspect to the sixth aspect.

According to a twelfth aspect, a chip is provided. The chip includes a processor and a communication interface. The processor reads, through the communication interface, instructions stored in a memory, to perform the method according to any one of the implementations of the first aspect to the sixth aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method according to any one of the implementations.

According to a thirteenth aspect, a communication system is provided. The communication system includes a terminal device and a network device. The terminal device is configured to perform the communication method according to any one of the implementations of the first aspect, the third aspect, or the fifth aspect, and the network device is configured to perform the communication method according to any one of the implementations of the second aspect, the fourth aspect, or the sixth aspect.

**BRIEF DESCRIPTION OF DRAWINGS**

FIG. 1 is a diagram of a communication system according to an embodiment of this application;
FIG. 2 is a diagram of different thresholds corresponding to a plurality of measurement events;
FIG. 3 is a schematic interaction diagram of a communication method according to an embodiment of this application;
FIG. 4 is a schematic interaction diagram of a communication method according to an embodiment of this application;
FIG. 5 is a schematic interaction diagram of a communication method according to an embodiment of this application; and
FIG. 6 is a schematic block diagram of a communication apparatus according to an embodiment of this application.

**DESCRIPTION OF EMBODIMENTS**

For ease of understanding of embodiments of this application, the following several descriptions are provided first. First, in this application, "indicating" may include directly indicating and indirectly indicating. When a piece of indication information indicates A, the indication information may directly indicate A or indirectly indicate A, but it does not indicate that the indication information definitely carries A.

Information indicated by the indication information is referred to as to-be-indicated information. In a specific implementation process, there are a plurality of manners of indicating the to-be-indicated information, for example, but not limited to, the following manners: The to-be-indicated information may be directly indicated. For example, the to-be-indicated information or an index of the to-be-indicated information is indicated. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence that is of pieces of information and that is pre-agreed on (for example, stipulated in a protocol), to reduce indication overheads to some extent. In addition, a common part of the pieces of information may be identified and indicated in a unified manner, to reduce indication overheads caused by separately indicating same information.

Second, "at least one" in this application means one or more, and "a plurality of" means two or more. In addition, in embodiments of this application, "first", "second", and various numeric numbers (for example, "1" and "2") are merely for differentiation for ease of description, and are not for limiting the scope of embodiments of this application. Sequence numbers of the following processes do not mean execution sequences. The execution sequences of the processes should be determined based on functions and internal logic of the processes, and should not be construed as any limitation on implementation processes of embodiments of this application. It should be understood that, objects described in this way may be interchangeable in appropriate cases, so that solutions other than embodiments of this application can be described.

Third, in embodiments of this application, a term like "example" or "for example" is for representing giving an example, an illustration, or a description. Any embodiment or design solution described as an "example" or "for example" in this application should not be explained as being more preferred or having more advantages than another embodiment or design solution. To be precise, use of the term like "example" or "for example" is intended to present a relative concept in a specific manner.

Fourth, in embodiments of this application, "protocols" may be standard protocols in the communication field, and may include, for example, an NR protocol and a related protocol applied to a future communication system. This is not limited in this application.

Fifth, the term "and/or" in this specification describes only an association relationship between associated objects, and represents that three relationships may exist. For example, A and/or B may represent the following three cases: Only A exists, both A and B exist, and only B exists. In addition, the character "/" in this specification generally indicates an "or" relationship between the associated objects.

The following describes the technical solutions in this application with reference to accompanying drawings.

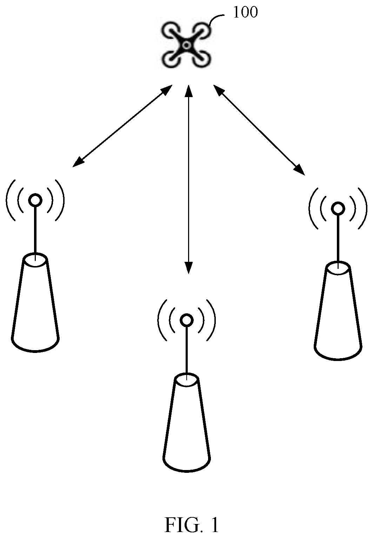

FIG. 1 is a diagram of a communication system according to an embodiment of this application. As shown in FIG. 1, the communication system may include one or more terminal devices and one or more network devices.

The terminal device may communicate with the one or more network devices. The terminal device may be an aerial terminal device. The terminal device can fly above the network device, and connected to the network device through an air interface (a Uu interface). In this case, the terminal device mainly performs line-of-sight communication with the network device. A quantity of network devices that can communicate with the terminal device varies with a flight altitude of the terminal device. Likewise, signal strength or signal quality that can be obtained by the terminal device also varies with the flight altitude of the terminal device.

For example, the terminal device in embodiments of this application may be an aerial aircraft like an uncrewed aerial vehicle or an uncrewed spacecraft.

For example, the network device in embodiments of this application may be an access network device, and the access network device may be any device having a wireless transceiver function. The device includes but is not limited to: an evolved NodeB (evolved NodeB, eNB), a next generation eNB (next generation eNodeB, ng-eNB) connected to a 5th generation core network (5th generation core network, 5GC), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a radio relay node, a wireless backhaul node, a transmission point (transmission point, TP), a transmission and reception point (transmission and reception point, TRP), or the like, may be a gNB or a transmission point (a TRP or a TP) in a 5G (for example, new radio (new radio, NR)) system, or one or a group of (including a plurality of antenna panels) antenna panels of a base station in the 5G system, or may be a network node that constitutes a gNB or a transmission point, for example, a distributed unit (distributed unit, DU), a central unit (central unit, CU), or a CU-control plane (control plane, CP), a CU-user plane (user plane, UP), a radio unit (radio unit, RU), or the like. The CU and the DU may be separately disposed, or may be included in a same network element.

For example, in different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application.

The network device may configure some configuration information for the terminal device, for example, measurement report configuration information, so that the terminal device can perform, based on the measurement report configuration information, a corresponding measurement event when a trigger condition is satisfied, and report a corresponding measurement report to the network device.

For example, measurement events configured by the network device for some common terminal devices such as non-aerial terminal devices may mainly include events A1, A2, A3, A4, and A5.

The event A1 may be expressed as follows: When signal strength of a serving cell of the terminal device is greater than a threshold A1, the terminal device may report, to the network device, a measurement report including the signal strength that is of the serving cell and that is measured by the terminal device. The network device may enable, based on the measurement report 1, the terminal device to disable measurement of some cells. The event A2 may be expressed as follows: When the signal strength of the serving cell of the terminal device is less than a threshold A2, the terminal device may report, to the network device, the measurement report including the signal strength that is of the serving cell and that is measured by the terminal device. The terminal device may perform handover of the serving cell of the terminal device based on the measurement report. The event A3 may be expressed as follows: When signal strength of a cell (also referred to as a neighboring cell) neighboring to the serving cell of the terminal device is greater than the signal strength of the serving cell of the terminal device, the terminal device may report, to the network, a measurement report including the signal strength of the neighboring cell. The network device may determine, based on the measurement report, whether to hand over the terminal device to the neighboring cell. The event A4 may be expressed as follows: When the signal strength of the neighboring cell is greater than a threshold A4, the terminal device may report, to the network device, the measurement report including the signal strength of the neighboring cell. The event A5 may be expressed as follows: When the signal strength of the serving cell of the terminal device is less than a threshold A5, and the signal strength of the neighboring cell is greater than a threshold A6, the terminal device may report, to the network device, a measurement report including the signal strength of the serving cell and the signal strength of the neighboring cell.

In embodiments of this application, an example in which the terminal device is the uncrewed aerial vehicle is used for description. For example, measurement events configured by the network device for the uncrewed aerial vehicle may mainly include an event H1 and an event H2. In a possible implementation, the event H1 may be expressed as follows: When an aerial altitude of the uncrewed aerial vehicle is greater than a threshold A, the uncrewed aerial vehicle performs a measurement event, for example, measures signal quality, and reports, to the network device, a measurement report corresponding to the measurement event. The event H2 may be expressed as follows: When the aerial altitude of the uncrewed aerial vehicle is less than a threshold B, the uncrewed aerial vehicle performs a measurement event, for example, measures signal quality, and reports, to the network device, a measurement report corresponding to the measurement event. In this way, the network device can learn of a current status of the uncrewed aerial vehicle based on the measurement report reported by the uncrewed aerial vehicle, and the network device may further make some decisions, for example, handover of a serving cell of the uncrewed aerial vehicle. For the event H1, an entering condition is:

$$Ms - Hys > Thresh + Offset;$$

and
a leaving condition is:

$$Ms + Hys < Thresh + Offset.$$

Ms represents the aerial altitude of the terminal device. For example, Ms may be expressed in meters.

Hys represents a hysteresis value of the second measurement time, and may also be referred to as a hysteresis parameter.

Thresh indicates the threshold A, and represents a reference threshold parameter of the event H1.

Offset indicates an offset value of the threshold A. An absolute threshold of the event H1 may be determined by adding the offset value to the threshold A.

It should be understood that the entering condition for the event H1 may be understood as a condition for triggering execution of the event H1. When the foregoing parameters satisfy the entering condition, the uncrewed aerial vehicle may be triggered to execute the event H1 and report a measurement report corresponding to the event H1.

The leaving condition for the event H1 may be understood as follows: When the foregoing parameters satisfy the leaving condition, a trigger condition for the event H1 is not satisfied, and the uncrewed aerial vehicle does not need to execute the event H1.

For the event H2, an entering condition is:

$$Ms + Hys < Thresh + Offset;$$

and
a leaving condition is:

$$Ms - Hys > Thresh + Offset.$$

Thresh herein represents the threshold B, and represents a reference threshold parameter of the event H2. Meanings of other parameters are the same as those of the foregoing parameters. Details are not described herein again.

In another possible implementation, the event H1 may be expressed as follows: When an aerial altitude of the uncrewed aerial vehicle becomes greater than a threshold A, the uncrewed aerial vehicle performs a measurement event, for example, measures signal quality, and reports, to the network device, a measurement report corresponding to the measurement event. The event H2 may be expressed as follows: When the aerial altitude of the uncrewed aerial vehicle becomes less than a threshold B, the uncrewed aerial vehicle performs a measurement event, for example, measures signal quality, and reports, to the network device, a measurement report corresponding to the measurement event.

In this case, the event H1 and/or the event H2 can be triggered only when the aerial altitude of the uncrewed aerial vehicle changes. For example, in this case, the event H1 may be expressed as follows: When the aerial altitude of the uncrewed aerial vehicle becomes greater than the threshold A, the uncrewed aerial vehicle performs the measurement event, and reports the corresponding measurement report. The event H2 may be expressed as follows: When the aerial altitude of the uncrewed aerial vehicle becomes less than the threshold B, the uncrewed aerial vehicle performs the measurement event, and reports the corresponding measurement report.

In addition, each network device may configure a plurality of events H1 and/or a plurality of events H2 for the uncrewed aerial vehicle. For the plurality of events H1 or events H2, each event corresponds to a different threshold.

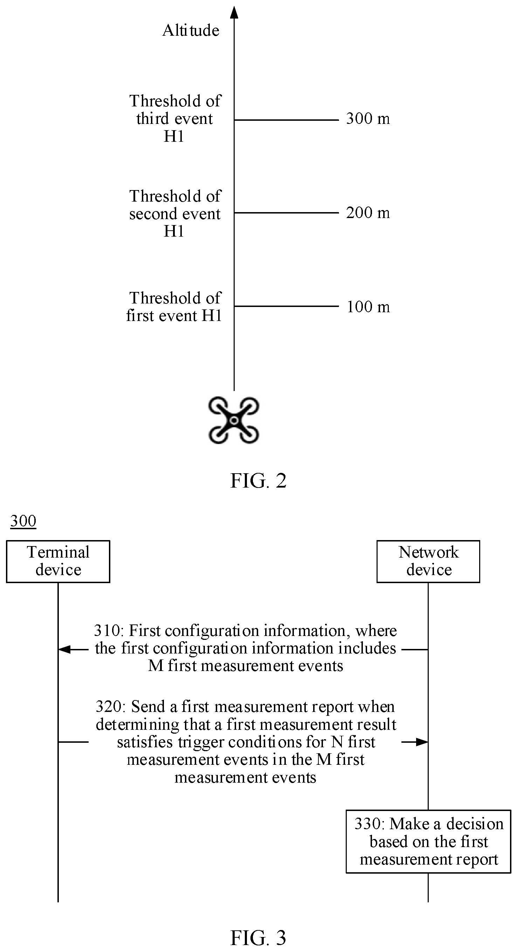

FIG. 2 is a diagram of different thresholds corresponding to a plurality of measurement events.

For example, a network device may configure a plurality of events H1 for an uncrewed aerial vehicle. For example, the network device may separately configure a first event H1, a second event H1, and a third event H1 for the uncrewed aerial vehicle.

For example, the network device may send configuration information 1 to the uncrewed aerial vehicle, the configuration information 1 may include the first event H1, and a threshold corresponding to the first event H1 is 100 meters. When an altitude of the uncrewed aerial vehicle is greater than 100 meters, the uncrewed aerial vehicle may execute the first event H1, and send a corresponding measurement report to the network device.

The network device may send configuration information 2 to the uncrewed aerial vehicle, the configuration information 2 may include the second event H1, and a threshold corresponding to the second event H1 is 200 meters. When the altitude of the uncrewed aerial vehicle is greater than 200 meters, the uncrewed aerial vehicle may execute the second event H1, and send a corresponding measurement report to the network device.

The network device may send configuration information 3 to the uncrewed aerial vehicle, the configuration information 3 may include the third event H1, and a threshold corresponding to the third event H1 is 300 meters. When the altitude of the uncrewed aerial vehicle is greater than 300 meters, the uncrewed aerial vehicle may execute the third event H1, and send a corresponding measurement report to the network device.

The measurement report may be signal strength. For example, the signal strength may be signal strength of a serving cell of a terminal device or signal strength of a neighboring cell of the serving cell of the terminal device, or the signal strength may be signal strength of a cell detected by a terminal device.

Alternatively, the measurement report may be an altitude of a terminal device, or the measurement report may be other content. This is not limited in this embodiment of this application.

It may be understood that, when the network device configures a plurality of events H2 for the uncrewed aerial vehicle, a process thereof is similar.

When the network configuration configures a plurality of measurement events for the uncrewed aerial vehicle, for example, the network device configures the plurality of events H1 and/or the plurality of events H2 for the uncrewed aerial vehicle, if the uncrewed aerial vehicle is at a specific altitude A when accessing a network, or the network device reconfigures the events H1 and/or the events H2 for the uncrewed aerial vehicle at a specific altitude A, and in some possible implementations, if the altitude A is greater than thresholds corresponding to the plurality of events H1, or the altitude A is less than thresholds corresponding to the plurality of events H2, the altitude A satisfies thresholds corresponding to the plurality of measurement events, which triggers the uncrewed aerial vehicle to perform the plurality of measurement events and report a plurality of measurement reports to the network device. Consequently, the uncrewed aerial vehicle repeatedly reports the measurement reports, causing additional signaling overheads.

In view of this, embodiments of this application provide a communication method, to preventing an uncrewed aerial vehicle from repeatedly reporting measurement reports.

FIG. 3 is a schematic interaction diagram of a communication method according to an embodiment of this application. As shown in FIG. 3, the method 300 may include step 310 to step 330.

310: A network device sends first configuration information to a terminal device, where the first configuration information includes M first measurement events, and the first measurement event includes a first threshold. Correspondingly, the terminal device receives the first configuration information.

The M first measurement events may be M events H1 described above, the M first measurement events may be M events H2 described above, or the M first measurement events may be M events including H1 and H2 described above. Each first measurement event may correspond to one first threshold. For the event H1, when a first measurement result is greater than the first threshold, it may be understood as that the first measurement result satisfies a trigger condition for the event H1. For the event H2, when a first measurement result is less than the first threshold, it may be understood as that the first measurement result satisfies a trigger condition for the event H2. It should be understood that the first configuration information may include but is not limited to one or a combination of at least two of radio resource control (radio resource control, RRC) signaling, MAC layer signaling, and physical layer signaling.

320: The terminal device sends a first measurement report to the network device when determining that the first measurement result satisfies trigger conditions for N first measurement events in the M first measurement events, where the first measurement report includes a measurement report corresponding to a target first measurement event in the N first measurement events, and N is greater than or equal to 2. Correspondingly, the network device receives the first measurement report.

The target first measurement event may be one first measurement event, or may be a plurality of first measurement events whose quantity is less than N.

The first measurement result may be altitude information. For example, the first measurement result may be an altitude of the terminal device at a current moment.

It should be understood that the first measurement result may alternatively be altitude difference information. For example, the first measurement result may be an altitude difference of the terminal device within preset time (for example, per unit time). The first measurement result may alternatively be other content.

For example, content included in the first measurement report may be signal strength. For example, the signal strength may be signal strength of a serving cell of the terminal device or signal strength of a neighboring cell of the serving cell of the terminal device, or the signal strength may be signal strength of a cell detected by the terminal device.

Alternatively, the first measurement report may include an altitude of the terminal device, or the first measurement report may include other content. This is not limited in this embodiment of this application.

Optionally, the terminal device sends K first measurement reports to the network device when determining that the first measurement result satisfies the trigger conditions for the N first measurement events in the M first measurement events, where the K first measurement reports are measurement reports corresponding to K first measurement events in the N first measurement events, N is greater than or equal to 2, and K is less than or equal to 2.

Optionally, when K is equal to 2, the N first measurement events include different types of measurement events. Optionally, N is greater than or equal to 3, and the K first measurement reports are measurement reports corresponding to the different types of measurement events.

For example, when K=1, the terminal device sends one first measurement report to the network device when determining that the first measurement result satisfies the trigger conditions for the N first measurement events in the M first measurement events. For example, the first measurement report may be a measurement report corresponding to one of the N first measurement events. In this way, the terminal device can report one measurement report, to avoid repeatedly reporting a plurality of measurement reports.

In this case, the N first measurement events may be N events H1 described above, or may be N events H2 described above, or the N first measurement events may include both the event H1 described above and the event H2 described above.

In some examples in which K=1, that the terminal device sends the K first measurement reports when determining that the first measurement result satisfies the trigger conditions for the N first measurement events in the M first measurement events includes:

obtaining N measurement reports corresponding to the N first measurement events, where each first measurement event corresponds to one measurement report; and
sending one first measurement report that is in the N measurement reports and that corresponds to a first trigger condition that the first measurement result satisfies, where the first trigger condition is one of the trigger conditions that the N first measurement events satisfy.

When the first measurement result satisfies the trigger conditions for the N first measurement events, the terminal device may separately perform the N first measurement events, and obtain the N measurement reports corresponding to the N first measurement events. Then, the terminal device may select one measurement report from the N measurement reports, and send the measurement report to the network device. For example, the terminal device may select the first measurement report corresponding to the first trigger condition in the plurality of trigger conditions that the first measurement result satisfies, and send the first measurement report to the network device.

In this way, although the terminal device obtains the plurality of measurement reports through measurement, the terminal device needs to select only one measurement report to be reported to the network device. In this way, repeated reporting of the plurality of measurement reports can be avoided, so that signaling overheads are reduced.

In some other examples in which K=1, that the terminal device sends the K first measurement reports when determining that the first measurement result satisfies the trigger conditions for the N first measurement events in the M first measurement events includes:

obtaining the first measurement report corresponding to a first trigger condition that the first measurement result satisfies, where the first trigger condition is one of the trigger conditions that the N first measurement events satisfy; and
sending one first measurement report corresponding to the first trigger condition that the first measurement result satisfies.

When the first measurement result satisfies the trigger conditions for the N first measurement events, the terminal device needs to select only one first measurement event from the N first measurement events without measuring another first measurement event, obtains a first measurement report of the first measurement event, and sends the first measurement report to the network device. For example, the terminal device may choose to perform a measurement event corresponding to the first trigger condition, and send a measurement report of the measurement event.

In this way, the terminal device needs to perform only one measurement event, and sends a measurement report of the measurement event to the network device. In this way, repeated reporting of the plurality of measurement reports can be avoided, so that signaling overheads are reduced.

For example, when K=2, the terminal device sends two first measurement reports to the network device when determining that the first measurement result satisfies the trigger conditions for the N first measurement events in the M first measurement events. For example, if the N first measurement events include both a plurality of events H1 and one or more events H2, or the N first measurement events include both one or more events H1 and a plurality of events H2, the first measurement reports may be a measurement report corresponding to one of the events H1 and a measurement report corresponding to one of the events H2. In this way, the terminal device can report one measurement report of each type, to avoid repeatedly reporting a plurality of measurement reports of one type of measurement events.

In some examples in which K=2, that the terminal device sends the K first measurement reports when determining that the first measurement result satisfies the N first measurement events in the M first measurement events includes:

obtaining N measurement reports corresponding to the N first measurement events, where each first measurement event corresponds to one measurement report; and
sending the K first measurement reports that are in the N measurement reports and that correspond to a first trigger condition that the first measurement result satisfies, where the first trigger condition is one of trigger conditions that each type in the different types of measurement events satisfies.

When the first measurement result satisfies the N first measurement events, in a scenario in which the terminal device needs to send the two first measurement reports, the terminal device may separately perform the N first measurement events, and obtain the N measurement reports corresponding to the N first measurement events. Then, the terminal device may select one first measurement report from each type of measurement events, and report the two first measurement reports.

For example, if the N first measurement events include a plurality of events H1 and a plurality of events H2, the terminal device may first obtain a plurality of measurement reports corresponding to the plurality of events H1 and a plurality of measurement reports corresponding to the plurality of events H2. Then, the terminal device selects one measurement report from the plurality of measurement reports corresponding to the plurality of events H1 and one measurement report from the plurality of measurement reports corresponding to the plurality of events H2, and reports the two measurement reports to the network device. For example, the terminal device may select the first measurement reports corresponding to the first trigger condition.

In this way, because the N first measurement events include the different types of measurement events (for example, the event H1 and the event H2), the terminal device may report one measurement report to the network device for each type, so that repeated reporting of measurement reports of each type of measurement events can be avoided.

In some other examples in which K=2, that the terminal device sends the K first measurement reports when determining that the first measurement result satisfies the N first measurement events in the M first measurement events includes:

obtaining the K first measurement reports corresponding to a first trigger condition that the first measurement result satisfies, where the first trigger condition is one of trigger conditions that each type in the different types of measurement events satisfies; and
sending the K first measurement reports corresponding to the first trigger condition that the first measurement result satisfies.

When the first measurement result satisfies the N first measurement events, in a scenario in which the terminal device needs to send the two first measurement reports, the terminal device may select one measurement event of each type, obtain a corresponding first measurement report, and report the first measurement report of each type. For example, the terminal device may select the first measurement reports corresponding to the first trigger condition.

For example, if the N first measurement events include a plurality of events H1 and a plurality of events H2, the terminal device may first select one corresponding event H1 from the plurality of events H1 and one corresponding event H2 from the plurality of events H2, and respectively executes the corresponding measurement events to obtain the two first measurement reports. Then, the terminal device reports the two measurement reports to the network device.

In this way, the terminal device needs to perform only one measurement event of each type, and reports one measurement report of the type, so that repeated reporting of measurement reports of each type of measurement events can be avoided.

Optionally, when the first measurement result satisfies the trigger conditions for the N first measurement events in the M first measurement events, the terminal device may further send the K first measurement reports without a determining action.

For example, the first trigger condition may include one of the following conditions:

a first threshold that is in N first thresholds corresponding to the N first measurement events and that is closest to a flight altitude at which the terminal device performs measurement;
a largest first threshold in N first thresholds corresponding to the N first measurement events;
a smallest first threshold in N first thresholds corresponding to the N first measurement events;
a first threshold corresponding to a trigger condition with earliest configuration time; or
a first threshold corresponding to a trigger condition with a highest priority.

Optionally, the first trigger condition may alternatively be a flight altitude when the terminal device receives the configuration information.

For example, N is 3, and the N first measurement events are three events H1: an event H1 1, an event H1 2, and an event H1 3. A first threshold corresponding to the event H1 1 is 100 meters. Correspondingly, a trigger condition for the event H1 1 is that the altitude of the terminal device is greater than 100 meters. A first threshold corresponding to the event H1 2 is 200 meters. Correspondingly, a trigger condition for the event H1 2 is that the altitude of the terminal device is greater than 200 meters. A first threshold corresponding to the event H1 3 is 300 meters. Correspondingly, a trigger condition for the event H1 3 is that the altitude of the terminal device is greater than 300 meters.

If the altitude of the terminal device is 320 meters, the altitude satisfies all of the trigger conditions for the three events H1. In this case, the terminal device may obtain three measurement reports corresponding to the three events H1, and send, to the network device, a measurement report corresponding to 300 meters closest to 320 meters; the terminal device sends, to the network device, a measurement report corresponding to the largest first threshold 300 meters; the terminal device sends, to the network device, a measurement report corresponding to the smallest first threshold 100 meters; if the first threshold corresponding to the trigger condition with the earliest configuration time of the network device is 100 meters, the terminal device may send, to the network device, a measurement report corresponding to the first threshold 100 meters corresponding to the trigger condition with the earliest configuration time; or when configuring the first measurement event, the network device may further configure a priority of the first measurement event; and if the first threshold corresponding to the trigger condition with the highest priority is 300 meters, the terminal device may send, to the network device, a measurement report corresponding to the trigger condition 300 meters with the highest priority.

It may be understood that, if the N first measurement events are the N events H2, for technical solutions thereof, refer to the related descriptions of the event H1. For brevity, details are not described herein again.

In some implementations, if the N first measurement events include both one or more events H1 and one or more events H2, when the first measurement result (the altitude) of the terminal device satisfies the trigger conditions for the N first measurement events, the terminal device may report a measurement report in the following several manners. Manner 1: The terminal device reports a measurement report corresponding to one event H1 in the one or more events H1.

It should be understood that, for a specific manner in which the terminal device reports the measurement report corresponding to the event H1, refer to the foregoing related descriptions.

Manner 2: The terminal device reports a measurement report corresponding to one event H2 in the one or more events H2.

It should be understood that, for a specific manner in which the terminal device reports the measurement report corresponding to the event H2, refer to the foregoing related descriptions.

Manner 3: The terminal device reports a measurement report corresponding to one event H1 in the one or more events H1 and a measurement report corresponding to one event H2 in the one or more events H2.

It should be understood that, for a specific manner in which the terminal device reports the measurement report corresponding to the event H1 and a specific manner in which the terminal device reports the measurement report corresponding to the event H2, refer to the foregoing related descriptions.

Optionally, the first measurement report may further include an identifier of the corresponding measurement event.

Optionally, the method may further include step 330. In some examples, step 330 may alternatively not be performed. 330: The network device makes a decision based on the first measurement report.

For example, after receiving the first measurement report, the network device may perform handover of the serving cell of the terminal device. Alternatively, after receiving the first measurement report, the network device configures some new configuration information for the terminal device.

It should be understood that a specific action performed by the network device after the network device receives the first measurement report is not limited in this embodiment of this application. In another example, after the network device receives the first measurement report, the network device may obtain a current status of the terminal device. In this case, the network device may alternatively not perform a task action.

Based on this embodiment of this application, the network device may configure a plurality of measurement events for the terminal device. When the first measurement result satisfies the trigger conditions for the N first measurement events in the M first measurement events, the terminal device may send one of the measurement reports or one measurement report of each type to the network device. In this way, a case in which the terminal device repeatedly sends measurement reports to the network device can be avoided, so that the signaling overheads of the terminal device and the network device are reduced.

In some embodiments, the first measurement report may further include the flight altitude at which the terminal device performs measurement. For example, the first measurement report may include the first measurement result. This helps the network device obtain the current status of the terminal device.

In some embodiments, the first measurement event further includes one or more second thresholds; and

that the terminal device sends the K first measurement reports includes:

when determining that the first measurement result satisfies the N first thresholds corresponding to the N first measurement events and that one or more second measurement results satisfy the second threshold, sending the K first measurement reports.

For example, the second measurement result may be the signal strength or signal quality.

When determining that the first measurement result (for example, the altitude) satisfies the N first thresholds corresponding to the N first measurement events and that the one or more second measurement results (for example, the signal strength) satisfy the corresponding second threshold, the terminal device may determine that the first measurement result satisfies the trigger conditions for the N first measurement events in the M first measurement events, and send the K first measurement reports to the network device.

Based on this embodiment of this application, the terminal device needs to send the measurement report to the network device when the altitude satisfies the threshold and the signal strength satisfies the threshold. In this way, the terminal device can send the measurement report to the network device at the corresponding altitude. In this technical solution, the terminal device can adjust a threshold of a measurement event based on the altitude, to adapt to actual requirements of different strength of signals received by the terminal device at different altitudes.

In some embodiments, the second measurement result is the signal strength, and that the one or more second measurement results satisfy the corresponding second threshold includes one of the following:

The signal strength of the neighboring cell is greater than the signal strength of the serving cell of the terminal device;

the signal strength of the neighboring cell is greater than a first value; or

the signal strength of the serving cell is less than a second value, and the signal strength of the neighboring cell is greater than a third value.

It should be understood that the neighboring cell may be a cell corresponding to the serving cell of the terminal device. Specific values of the first value, the second value, and the third value are not limited in this embodiment of this application.

In some embodiments, before the terminal device sends the K first measurement reports to the network device, the method may further include:

applying a first measurement configuration, where the first measurement configuration includes a correspondence between a third threshold and first information.

It should be understood that the first measurement configuration may be included in the first configuration information. For example, the third threshold may be the altitude information or the altitude difference information. The first information may include a triggered-cell quantity and/or a to-be-measured beam.

The correspondence between the third threshold and the first information may be understood as content of the first information corresponding to the third threshold.

For example, if the third threshold is 100 meters, a triggered-cell quantity corresponding to the third threshold is 3, and/or a to-be-measured beam corresponding to the third threshold is a beam 1; or if the third threshold is 200 meters, a triggered-cell quantity corresponding to the third threshold is 4, and/or a to-be-measured beam corresponding to the third threshold is a beam 2. In this case, when the altitude is greater than 100 meters, a triggered-cell quantity applied by the terminal device is 3; and when a condition is satisfied, the beam 1 is for signal strength measurement.

In some embodiments, when the first measurement configuration includes a plurality of third thresholds, that the terminal device applies the first measurement configuration includes one of the following:

applying first information corresponding to a third threshold in the plurality of third thresholds that is closest to the flight altitude at which the terminal device performs measurement;

applying first information corresponding to a largest first threshold in the plurality of third thresholds;

applying first information corresponding to a smallest first threshold in the plurality of third thresholds;

first information corresponding to a third threshold with earliest configuration time; or

first information corresponding to a third threshold with a highest priority.

Based on this embodiment of this application, the terminal device can determine first information corresponding to an altitude threshold.

In some embodiments, that the terminal device sends the K first measurement reports includes:

when determining that the first measurement result satisfies the N first thresholds corresponding to the N first measurement events and that a quantity of cells in a triggered-cell list is greater than or equal to the triggered-cell quantity, and/or

when the first measurement result satisfies the N first thresholds corresponding to the N first measurement events, measuring the to-be-measured beam, and sending the K first measurement reports.

It should be understood that the quantity of cells in the triggered-cell list may be a quantity of cells that can be measured by the terminal device.

For example, the triggered-cell quantity is 4. When the first measurement result satisfies the N first thresholds (altitude thresholds), and the quantity of cells in the triggered-cell list of the terminal device is greater than 4, it may be determined that the first measurement result satisfies the trigger conditions for the N first measurement events in the M first measurement events. The terminal device may report the K first measurement reports to the network device only in this case, so that the signaling overheads can be reduced.

For another example, the to-be-measured beam is the beam 2, and the terminal device measures the beam 2. When the first measurement result satisfies the N first thresholds (altitude thresholds), the terminal device measures the beam 2, and reports the first measurement report. In this way, the terminal device measures the to-be-measured beam when the altitude satisfies the threshold, and then reports the first measurement report, so that the terminal device is applicable to requirements of different communication environments at different altitudes.

In some embodiments, when the first measurement event is the event H1, a first threshold of each event H1 may include one of the following content:

an altitude threshold (threshold) of the event H1;
a sum of an altitude threshold of the event H1 and a hysteresis value, or a difference of the altitude threshold of the event H1 minus the hysteresis (Hysteresis) value;
a sum of an altitude threshold corresponding to the event H1 and an offset value; or
a sum of an altitude threshold of the event H1 and an offset value, plus a hysteresis value; or the sum of the altitude threshold of the event H1 and the offset value, minus the hysteresis value.

In some embodiments, when the first measurement event is the event H2, a first threshold of each event H1 may include one of the following content:

an altitude threshold (threshold) of the event H2;
a sum of an altitude threshold of the event H2 and a hysteresis value, or a difference of the altitude threshold of the event H2 minus the hysteresis (Hysteresis) value;
a sum of an altitude threshold corresponding to the event H2 and an offset (offset) value; or
a sum of an altitude threshold of the event H2 and an offset value, plus a hysteresis value; or the sum of the altitude threshold of the event H2 and the offset value, minus the hysteresis value.

In some embodiments, the first configuration information further includes first indication information, and the first indication information indicates the terminal device to determine the first trigger condition.

For example, the network device may configure the first indication information in ReportConfig or ReportConfigToAddModList. The first indication information may be carried in a 1-bit (bit) byte of the first configuration information.

In some embodiments, that the terminal device determines the first trigger condition includes:
if the N first measurement events are a same type of first measurement events, determining, based on the first indication information, to use one of the trigger conditions that the N first measurement events satisfy as the first trigger condition.

For example, if the N first measurement events are the N events H1, the terminal device may determine, based on the first indication information, to use one trigger condition 1 in trigger conditions that the N events H1 satisfy as the first trigger condition.

For example, the first indication information indicates the terminal device to use a largest altitude threshold in altitude thresholds corresponding to the plurality of events H1 as the first trigger condition. Alternatively, the first indication information indicates the terminal device to use a smallest altitude threshold in altitude thresholds corresponding to the plurality of events H1 as the first trigger condition. Alternatively, the first indication information indicates the terminal device to use an altitude threshold closest to a flight altitude at which the terminal device performs measurement as the first trigger condition. Alternatively, the plurality of events H1 have different priorities (or altitude thresholds corresponding to the plurality of events H1 have different priorities), and the first indication information may indicate the terminal device to use an altitude threshold with a highest priority as the first trigger condition. Alternatively, when configuration time of the plurality of events H1 are different, the first indication information may indicate the terminal device to use an altitude threshold corresponding to an event H1 with earliest configuration time as the first trigger condition.

Correspondingly, the N second measurement events may alternatively be N events H2. For a manner in which the terminal device determines the first trigger condition based on the first indication information, refer to the foregoing related descriptions.

In some embodiments, that the terminal device determines the first trigger condition includes:
if the N measurement events are different types of first measurement events, determining, based on the first indication information, to use one of the trigger conditions that the N first measurement events satisfy as the first trigger condition.

For example, the N measurement events include both the one or more events H1 and the one or more events H2.

In a manner, the first indication information may indicate the terminal device to use one of trigger conditions that the one or more events H1 satisfy as the first trigger condition. For a specific result indicated by the first indication information, refer to the foregoing descriptions.

In another manner, the first indication information may indicate the terminal device to use one of trigger conditions that the one or more events H2 satisfy as the first trigger condition. For a specific result indicated by the first indication information, refer to the foregoing descriptions.

In another manner, the first indication information may alternatively indicate the terminal device to use one of trigger conditions that the one or more events H1 satisfy and one of trigger conditions that the one or more events H2 satisfy as the first trigger condition. In terms of the event H1 or the event H2, for a specific result indicated by the first indication information, refer to the foregoing descriptions.

In some optional embodiments, when a plurality of events H1 and/or a plurality of events H2 are configured in the first configuration information, the first configuration information may include the first indication information. In this way, the terminal device can report a measurement report of a specific measurement event based on the first indication information, to avoid repeatedly reporting measurement reports, so that the signaling overheads can be reduced.

It should be understood that, when there is no first indication information, the terminal device may also determine the first trigger condition based on the foregoing logic. This is not limited in this embodiment of this application.

In some embodiments, the first configuration information is initially configured configuration information or reconfigured configuration information.

In this technical solution, when the first configuration information is the initially configured configuration information or the reconfigured configuration information, the terminal device may be enabled to report a measurement report to the network device once, to avoid a case in which the terminal device does not report the measurement report to the network device.

In some embodiments, when the first configuration information is the initially configured configuration information or the reconfigured configuration information, and the terminal device has reported the first measurement report, and when determining that the altitude of the terminal device becomes greater than a threshold C, the terminal device may perform a measurement event C, and report a measurement report C of the measurement event C to the network device; or when determining that the altitude of the terminal device becomes less than a threshold D, the terminal device may perform a measurement event D, and report a measurement report D of the measurement event D to the network device.

It may be understood that the measurement event C and the measurement event D are configured by the network device for the terminal device. When the network device configures a plurality of measurement events C and/or measurement events D, the terminal device may also select, based on the foregoing related descriptions, a measurement report of one of the measurement events, and report the measurement report. Details are not described herein again.

It should be understood that, for specific descriptions of reporting the first measurement report by the terminal device in this embodiment, refer to the foregoing related descriptions. For brevity, details are not described herein again. Optionally, the measurement report C or the measurement report D may further include the flight altitude at which the terminal device performs measurement.

In some embodiments, the first indication information may further indicate the terminal device to report the measurement report C or the measurement report D to the network device when the first configuration information is the initially configured configuration information or the reconfigured configuration information and the terminal device has reported the first measurement report and when a condition is satisfied.

In some embodiments, the first configuration information may further include second indication information, and the second indication information indicates the terminal device to determine, based on relationships between altitude difference information within the preset time and the first thresholds, that the first measurement result satisfies the trigger conditions for the N first measurement events.

For example, for one event H1, when the altitude difference information within the preset time is greater than the corresponding first threshold, it may be determined that the first measurement result satisfies the trigger condition for the corresponding measurement event. For one event H2, when the altitude difference information within the preset time is less than the corresponding first threshold, it may be determined that the first measurement result satisfies the trigger condition for the corresponding measurement event.

For example, the preset time is unit time. The preset time may alternatively be another value, for example, 2 seconds or 3 seconds.

For example, the second indication information may be in a 1-bit byte in the first configuration information.

It should be understood that, in some possible implementations, when the network device includes a CU and a DU, step 310 may be specifically performed by the DU. For example, the CU may send the first configuration information to the DU, and the DU specifically sends the first configuration information to the terminal device.

For another example, the network device receives the first measurement report sent by the terminal device. Specifically, the DU may receive the first measurement report sent by the terminal device. Then, the DU may send the first measurement report to the CU, and the CU performs processing and decision-making.

For another example, step 330 may be performed by the CU.

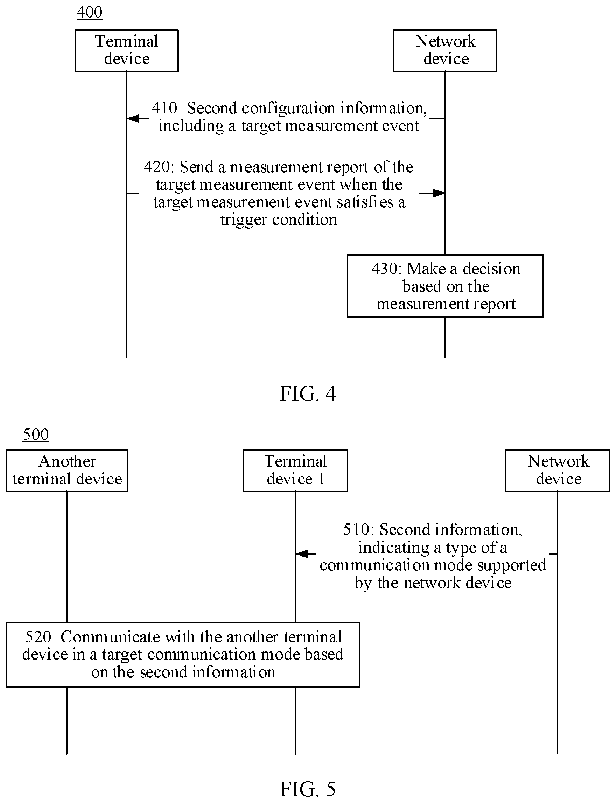

In some cases, the network device may further configure a new measurement event for the terminal device, so that the terminal device sends a measurement report to the network device when the new measurement event satisfies a trigger condition. This technical solution is described below with reference to FIG. 4.

FIG. 4 is a schematic flowchart of a communication method according to an embodiment of this application. As shown in FIG. 4, the method 400 may include step 410 to step 430.

410: A network device sends second configuration information to a terminal device, where the second configuration information includes a target measurement event, and the target measurement event is a measurement event triggered based on a relationship between altitude difference information and threshold information. Correspondingly, the terminal device receives the second configuration information.

In some embodiments, the target measurement event may include a second measurement event and/or a third measurement event, the second measurement event is a measurement event triggered when an altitude difference of the terminal device is greater than a first threshold, and the third measurement event is a measurement event triggered when the altitude difference of the terminal device is less than a second threshold.

The altitude difference information may be a difference of a first altitude minus a second altitude of the terminal device, the first altitude is an altitude of the terminal device at a first moment, and the second altitude is an altitude of the terminal device at a second moment.

For example, the first moment may be a current moment of the terminal device. Alternatively, the first moment is a moment at which the terminal device performs the measurement event, and correspondingly, the first altitude is an altitude at which the terminal device performs the measurement event.

The second moment may be a moment before the first moment. For example, the second moment is a moment that is 1 second before the first moment or a moment that is 5 seconds before the first moment.

Alternatively, the altitude difference may be described as an altitude difference of the terminal device within preset time. Alternatively, the altitude difference may be an altitude difference of the terminal device per unit time.

For example, the altitude difference is the altitude difference per unit time. When the altitude difference is a positive value, it indicates that the terminal device is in an ascending process, and an altitude of the terminal device is continuously increasing. When the altitude difference is a negative value, it indicates that the terminal device is in a descending process, and an altitude of the terminal device is continuously decreasing.

In some examples, the second configuration information may further include the second altitude. In this case, the second altitude may be a fixed value. For example, the second altitude is 50 meters or 100 meters. Alternatively, the second altitude may be an altitude at which the terminal device receives the second configuration information, and the second altitude may also be referred to as an initial altitude.

A specific value of the first threshold is not limited in this embodiment of this application. For example, the first threshold may be 5 meters or 10 meters.

For the second measurement event and the third measurement event,

an entering condition is:

$$Ms - \text{Height-origin} - \text{Hys} > \text{Thresh} + \text{Offset};$$

$$|Ms - \text{Height-origin} - \text{Hys}| > \text{Thresh} + \text{Offset};$$

or

$$|Ms - \text{Height-origin}| > \text{Thresh};$$

and
a leaving condition is:

$$Ms - \text{Height-origin} - \text{Hys} < \text{Thresh} + \text{Offset};$$

$$|Ms - \text{Height-origin} - \text{Hys}| < \text{Thresh} + \text{Offset};$$

or

$$|Ms - \text{Height-origin}| < \text{Thresh}.$$

Ms represents an aerial altitude of the terminal device, namely, the foregoing first altitude. For example, Ms may be expressed in meters.

Height-origin indicates the initial altitude of the terminal device, namely, the foregoing second altitude.

Hys represents a hysteresis value of the second measurement event, and may also be referred to as a hysteresis parameter.

Thresh indicates the foregoing threshold information. When Thresh, namely, the foregoing first threshold, is a positive value, it indicates a case in which the terminal device ascends. When Thresh, namely, the foregoing first threshold, is a negative value, it indicates a case in which the terminal device descends.

Offset indicates an offset value of the foregoing threshold information.

It may be understood that, when the second altitude is an altitude configured by the network device, that is, when the second configuration information includes the second altitude, Height-origin in the foregoing formulas may be denoted as Height-configured.

420: The terminal device sends a measurement report of the target measurement event to the network device when the target measurement event satisfies a trigger condition. Correspondingly, the network device receives the measurement report.

For the second measurement event, when the altitude difference of the terminal device is greater than the first threshold, it may be determined that the second measurement event satisfies a trigger condition; or when the altitude of the terminal device satisfies the entering condition for the second measurement event, the terminal device sends a measurement report of the second measurement event to the network device.

For the third measurement event, when the altitude difference of the terminal device is less than the second threshold, it may be determined that the third measurement event satisfies a trigger condition; or when the altitude of the terminal device satisfies the entering condition for the third measurement event, the terminal device sends a measurement report of the third measurement event to the network device.

For example, the measurement report may be signal strength. For example, the signal strength may be signal strength of a serving cell of the terminal device or signal strength of a neighboring cell of the serving cell of the terminal device, or the signal strength may be signal strength of a cell detected by the terminal device.

Alternatively, the measurement report may be the altitude of the terminal device, or the measurement report may be other content. This is not limited in this embodiment of this application.

430: The network device makes a decision based on the measurement report.

For example, after receiving the measurement report, the network device may perform handover of the serving cell of the terminal device. Alternatively, after receiving the measurement report, the network device configures some new configuration information for the terminal device.

It should be understood that a specific action performed by the network device after the network device receives the measurement report is not limited in this embodiment of this application. In another example, after the network device receives the measurement report, the network device may obtain a current status of the terminal device. In this case, the network device may alternatively not perform a task action.

It should be understood that step 430 is an optional step. In some embodiments, step 430 may alternatively not be performed.

Based on this embodiment of this application, the network device may configure the measurement event for the terminal device, so that the terminal device reports the measurement report when the relationship between the altitude difference information and the threshold information satisfies the condition. This can avoid a case in which the terminal device repeatedly reports measurement reports just when altitudes and thresholds satisfy conditions, so that signaling overheads of the terminal device and the network device can be reduced.

It should be understood that, in some possible implementations, when the network device includes a CU and a DU, step 510 may be specifically performed by the DU. For example, the CU may send the second configuration information to the DU, and the DU specifically sends the second configuration information to the terminal device.

For another example, the network device receives the measurement report sent by the terminal device. Specifically, the DU may receive the measurement report sent by the terminal device. Then, the DU may send the measurement report to the CU, and the CU performs processing and decision-making.

For another example, step 530 may be performed by the CU.

In some embodiments, the target measurement event may be further combined with the event A3, the event A4, or the event A5.

In this case, the second measurement event may alternatively be understood as that the terminal device sends the measurement report to the network device when the altitude difference of the terminal device is greater than the first threshold and signal strength information of the terminal device satisfies a second condition.

Correspondingly, the third measurement event may alternatively be understood as that the terminal device sends the measurement report to the network device when the altitude difference of the terminal device is less than the second threshold and signal strength of the terminal device satisfies the second condition.

For example, the second condition may include one of the following conditions:
The signal strength of the neighboring cell of the terminal device is greater than the signal strength of the serving cell of the terminal device;

the signal strength of the neighboring cell of the terminal device is greater than a threshold; or
the signal strength of the serving cell of the terminal device is less than a threshold 1, and the signal strength of the neighboring cell is greater than a threshold 2.

In this case, the terminal device sends the measurement report to the network device only when determining that the foregoing two conditions are satisfied. In this technical solution, the terminal device can adjust a threshold of a measurement event based on the altitude, to adapt to actual requirements of different strength of signals received by the terminal device at different altitudes.

In some embodiments, the target measurement event may be further combined with first information, and the first information may include a triggered-cell quantity and/or a measured-beam quantity.

In this technical solution, before sending the measurement report, the terminal device may further first apply a first measurement configuration. The first measurement configuration includes a correspondence between third threshold and the first information.

It may be understood that the first measurement configuration may be included in first configuration information.

For example, the third threshold is an altitude difference threshold of the terminal device. When the first information is the triggered-cell quantity, the first measurement configuration may be a correspondence between the altitude difference threshold and the corresponding triggered-cell quantity.

In this case, the second measurement event may alternatively be understood as that the terminal device sends the measurement report to the network device when the altitude difference of the terminal device is greater than the first threshold and a quantity of cells in a triggered-cell list is greater than or equal to the triggered-cell quantity, so that the signaling overheads can be reduced.

For example, if the altitude difference threshold is a first threshold 1, the corresponding triggered-cell quantity is 3; or if the altitude difference threshold is a first threshold 2, and the corresponding triggered-cell quantity is 4.

When determining that the altitude difference is greater than the first threshold 1, and the quantity of cells in the triggered-cell list is greater than 3, the terminal device sends the measurement report to the network device.

Correspondingly, the third measurement event may alternatively be understood as that the terminal device sends the measurement report to the network device when the altitude difference of the terminal device is less than the second threshold and the quantity of cells in the triggered-cell list is greater than or equal to the triggered-cell quantity.

It may be understood that the quantity of cells in the triggered-cell list is a quantity of cells measured by the terminal device.

Correspondingly, when the altitude difference satisfies a threshold, and when a quantity of cells in a triggered-cell list is less than the triggered-cell quantity, the terminal device does not send the measurement report to the network device. In this way, the terminal device needs to report the measurement report only once when the condition is satisfied, so that a case in which the terminal device frequently reports measurement reports can be avoided.

For example, the third threshold is an altitude difference threshold of the terminal device. When the first information is a to-be-measured beam, the first measurement configuration may be a correspondence between the altitude difference threshold and the corresponding to-be-measured beam.

In this case, the second measurement event may alternatively be understood as that the terminal device measures the to-be-measured beam and sends the measurement report to the network device when the altitude difference of the terminal device is greater than the first threshold, so that the terminal device is applicable to requirements of different communication environments at different altitudes.

For example, if the altitude difference threshold is a first threshold 1, the corresponding to-be-measured beam is a beam 1; and if the altitude difference threshold is a first threshold 2, the corresponding to-be-measured beam is a beam 2.

When the terminal device measures the beam 1, and the altitude difference of the terminal device is greater than the first threshold 1, the terminal device sends the measurement report to the network device.

Correspondingly, the third measurement event may alternatively be understood as that the terminal device measures the to-be-measured beam and sends the measurement report to the network device when the altitude difference of the terminal device is less than the second threshold.

For example, when the third threshold is an altitude difference threshold, and the first information is the triggered-cell quantity and a to-be-measured beam, the second measurement event may further indicate the terminal device to measure the to-be-measured beam; and when the altitude difference of the terminal device is greater than the first threshold, and a quantity of cells in a triggered-cell list is greater than or equal to the triggered-cell quantity, the terminal device sends the measurement report to the network device.

The third measurement event may alternatively be understood as that the terminal device measures the to-be-measured beam and sends the measurement report to the network device when the altitude difference of the terminal device is less than the second threshold and the quantity of cells in the triggered-cell list is greater than or equal to the triggered-cell quantity.

In this way, the terminal device can report the measurement report to the network device when determining that a plurality of conditions are satisfied. This technical solution can avoid a case in which the terminal device frequently reports the measurement reports to the network device.

A current communication standard (for example, R18) supports configuration of an aircraft to everything (aircraft to everything, A2X)-dedicated resource pool for an uncrewed aerial vehicle. On the A2X-dedicated resource pool, only A2X communication can be performed, and other sidelink communication cannot be performed. In addition, the current communication standard further supports A2X communication in a common vehicle to everything (vehicle to everything, V2X) communication resource pool. Therefore, if a network device connected to the uncrewed aerial vehicle is a network device that supports an earlier version of communication standard (for example, R17 or earlier), the uncrewed aerial vehicle may be incapable of determining whether A2X communication can be performed.

FIG. 5 is a schematic interaction diagram of a communication method according to an embodiment of this application. As shown in FIG. 5, the method 500 may include step 510 and step 520.

510: A network device sends second information, where the second information includes a type of a communication mode supported by the network device, and the type of the communication mode includes a first communication mode and/or a second communication mode.

In some possible embodiments, the second information may be indication information indicating the type of the communication mode supported by the network device, and/or the second information is configuration information of a resource pool of the communication mode supported by the network device.

For example, the first communication mode may be A2X, and the second communication mode may be V2X. It may be understood that the first communication mode and the second communication mode may alternatively be other communication modes.

In some examples, when the second information is the indication information indicating the communication mode supported by the network device, the second information may include indication information indicating A2X communication supported by the network device and/or indication information indicating V2X communication supported by the network device. For example, the indication information is carried in a 1-bit byte of the second information.

In some other examples, when the second information includes the configuration information of the resource pool of the communication mode supported by the network device, the configuration information may indicate and include an A2X-dedicated resource pool configuration and/or a V2X-dedicated resource pool configuration.

In some other examples, the second information may further include both the indication information and the corresponding configuration information.

For example, the second information may be sent by the network device in a broadcast or multicast manner. A specific manner of sending the second information is not limited in this embodiment of this application.

tion.

In some possible implementations, when the network device includes a CU and a DU, step 510 may be specifically performed by the DU. For example, the CU may send the second information to the DU, and the DU specifically sends the second information.

520: A terminal device 1 communicates with another terminal device in a target communication mode based on the second information, where the target communication mode is the first communication mode and/or the second communication mode.

In some optional embodiments, before step 520, the terminal device 1 may further first determine, based on the second information, that communication can be performed with the another terminal device in the target communication mode. In an example, if the terminal device 1 determines, based on the second information, that the network device supports A2X communication and configures a A2X-dedicated resource pool, the terminal device 1 may determine that A2X communication can be performed with the another terminal device in the A2X-dedicated resource pool, so that the terminal device 1 performs A2X communication with the another terminal device in the A2X-dedicated resource pool. In an example, if the terminal device 1 determines, based on the second information, that the network device supports A2X communication but configures no A2X-dedicated resource pool, which indicates that the network device configures a V2X-dedicated resource pool, the terminal device 1 may determine that A2X communication can be performed with the another terminal device in the V2X-dedicated resource pool, so that the terminal device 1 performs A2X communication with the another terminal device in the V2X-dedicated resource pool.

In an example, if the terminal device 1 determines, based on the second information, that the network device does not support A2X communication and configures no A2X-dedicated resource pool, the terminal device 1 may determine that A2X communication cannot be performed with the another terminal device. In this case, the terminal device 1 may perform V2X communication with the another terminal device in a V2X resource pool.

In an example, if the terminal device 1 determines, based on the second information, that the network device supports A2X and V2X communication, and configures an A2X resource pool and a V2X resource pool, the terminal device 1 may perform A2X communication with the another terminal device in the A2X resource pool, and perform V2X communication with the another terminal device in the V2X resource pool.

Based on this embodiment of this application, the network device may send, to the terminal device, the second information indicating the communication mode supported by the network device. This helps the terminal device determine a capability of the network device, so that the terminal device can determine whether A2X communication can be performed with the another terminal device, and determine to communicate with the another terminal device in a corresponding communication mode finally.

It should be understood that sequence numbers of the foregoing processes do not mean execution sequences. The execution sequences of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

It should be further understood that, in some of the foregoing embodiments, a device in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, the method and the operation implemented by the device (for example, the uncrewed aerial vehicle or the network device) may alternatively be implemented by a component (for example, a chip or a circuit) that can be used in the device.

It may be further understood that, some optional features in embodiments of this application may not depend on another feature in some scenarios, or may be combined with the another feature in some scenarios. This is not limited. It should be further understood that the foregoing embodiments of this application may be further combined with each other or partially combined to form a new embodiment. It should not be considered that this technical solution goes beyond the protection scope of this application. The foregoing embodiments may alternatively be separately implemented. This is not limited in embodiments of this application.

For example, the method 300 in FIG. 3 may be combined or partially combined with the method 400 and the method 500 to form a new embodiment.

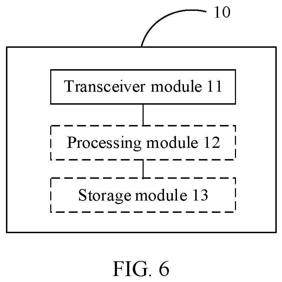

With reference to FIG. 6, the following describes in detail a communication apparatus provided in embodiments of this application. It should be understood that descriptions of apparatus embodiments correspond to the descriptions of the method embodiments. Therefore, for content that is not described in detail, refer to the foregoing method embodiments. For brevity, details of a part of content are not described again.

FIG. 6 is a schematic block diagram of a communication apparatus 10 according to an embodiment of this application. The apparatus 10 includes a transceiver module 11. The transceiver module 11 may implement a corresponding communication function. In other words, the transceiver module 11 is configured to perform operations related to receiving and sending. The transceiver module 11 may also be referred to as a communication interface, a communication unit, a transceiver unit, or the like.

Optionally, the apparatus 10 may further include a processing module 12. The processing module 12 is configured to perform data processing. The processing module 12 is configured to perform an operation other than receiving and sending.

Optionally, the apparatus 10 may further include a storage module 13. The storage module 13 may be configured to store instructions and/or data. The processing module 12 may read the instructions and/or the data in the storage module, to enable the apparatus to implement the actions of the device in the foregoing method embodiments.

In a design, the apparatus 10 may correspond to the terminal device (for example, the uncrewed aerial vehicle) in the foregoing method embodiments, or a component (for example, a chip) in the terminal device (for example, the uncrewed aerial vehicle).

The apparatus 10 may implement corresponding steps or procedures performed by the terminal device in the foregoing method embodiments. The transceiver module 11 may be configured to perform operations related to receiving and sending of the terminal device in the foregoing method embodiments, and the processing module 12 may be configured to perform a processing-related operation of the terminal device in the foregoing method embodiments.

In a possible implementation, the transceiver module 11 is configured to receive first configuration information from a network device, where the first configuration information includes M first measurement events, and the first measurement event includes a first threshold; and the transceiver module 11 is further configured to send K first measurement reports when determining that a first measurement result satisfies trigger conditions for N first measurement events in the M first measurement events, where the K first measurement reports are measurement reports corresponding to K first measurement events in the N first measurement events, N is greater than or equal to 2, and K is less than or equal to 2. Optionally, when K is equal to 2, the N first measurement events include different types of measurement events, N is greater than or equal to 3, and the K first measurement reports are measurement reports corresponding to the different types of measurement events.

When the apparatus 10 is configured to perform the methods in FIG. 3 to FIG. 5, the transceiver module 11 may be configured to perform the steps of receiving and sending information in the methods, for example, steps 310, 320, 410, and 420; and the processing module 12 may be configured to perform the processing steps in the methods.

In another design, the apparatus 10 may correspond to the network device in the foregoing method embodiments, or a component (for example, a chip) in the network device.

The apparatus 10 may implement corresponding steps or procedures performed by the network device in the foregoing method embodiments. The transceiver module 11 may be configured to perform operations related to receiving and sending of the network device in the foregoing method embodiments, and the processing module 12 may be configured to perform a processing-related operation of the network device in the foregoing method embodiments.

In a possible implementation, the transceiver module 11 is configured to send first configuration information to a terminal device, where the first configuration information includes M first measurement events, and the first measurement event includes a first threshold; and the transceiver module 11 is further configured to receive K first measurement reports, where the K first measurement reports are measurement reports corresponding to K first measurement events in N first measurement events in the M first measurement events that a first measurement result satisfies, N is greater than or equal to 2, and K is less than or equal to 2. Optionally, when K is equal to 2, the N first measurement events include different types of measurement events, N is greater than or equal to 3, and the K first measurement reports are measurement reports corresponding to the different types of measurement events.

When the apparatus 10 is configured to perform the methods in FIG. 3 to FIG. 5, the transceiver module 11 may be configured to perform the steps of receiving and sending information in the methods, for example, steps 310, 320, 410, 420, and 510; and the processing module 12 may be configured to perform the processing steps in the methods, for example, 330 and 430.

It should be understood that a specific process in which the units perform the foregoing corresponding steps has been described in detail in the foregoing method embodiments. For brevity, details are not described herein again.

In addition, the transceiver module 11 may alternatively be a transceiver circuit (for example, may include a receiving circuit and a sending circuit), and the processing module may be a processing circuit.

An embodiment of this application further provides a processor. The processor is configured to: execute a computer program or instructions stored in a memory, or read data/signaling stored in the memory, to perform the methods in the foregoing method embodiments. Optionally, there are one or more processors.

An embodiment of this application further provides a chip, including a processor and a communication interface. The processor reads, through the communication interface, instructions stored in a memory, to perform the methods provided in the foregoing embodiments.

An embodiment of this application further provides a computer-readable storage medium. The computer-readable storage medium stores computer instructions for implementing the methods performed by the device in the foregoing method embodiments.

For example, when a computer program is executed by a computer, the computer is caused to implement the methods performed by the terminal device or the network device in the foregoing method embodiments.

An embodiment of this application further provides a computer program product, including instructions. When the instructions are executed by a computer, the methods performed by the terminal device or the network device in the foregoing method embodiments are implemented.

An embodiment of this application further provides a communication system, including the terminal device and the network device in any one of the foregoing embodiments.

A person of ordinary skill in the art may be aware that, with reference to the units and algorithm steps in the examples described in embodiments disclosed in this specification, this application can be implemented by electronic hardware or a combination of computer software and the electronic hardware. Whether the functions are performed by hardware or software depends on particular applications and design constraint conditions for the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one location, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions in this application essentially, in other words, the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps in the methods in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method is applied to a terminal device, and the method comprises:

   receiving first configuration information from a network device, wherein the first configuration information comprises M first measurement events, and the first measurement event comprises a first threshold; and
   sending K first measurement reports when determining that a first measurement result satisfies trigger conditions for N first measurement events in the M first measurement events, wherein the K first measurement reports are measurement reports corresponding to K first measurement events in the N first measurement events, N is greater than or equal to 2, and K is less than or equal to 2, wherein
   when K is equal to 2, the N first measurement events comprise different types of measurement events, N is greater than or equal to 3, and the K first measurement reports are measurement reports corresponding to the different types of measurement events.

2. The method according to claim 1, wherein when K=1, the sending the K first measurement reports comprises:

   obtaining N measurement reports corresponding to the N first measurement events, wherein each first measurement event corresponds to one measurement report; and
   sending one first measurement report that is in the N measurement reports and that corresponds to a first trigger condition that the first measurement result satisfies, wherein the first trigger condition is one of the trigger conditions that the N first measurement events satisfy; or
   obtaining the first measurement report corresponding to a first trigger condition that the first measurement result satisfies, wherein the first trigger condition is one of the trigger conditions that the N first measurement events satisfy; and
   sending one first measurement report corresponding to the first trigger condition that the first measurement result satisfies.

3. The method according to claim 1, wherein when K=2, the sending the K first measurement reports comprises:

   obtaining N measurement reports corresponding to the N first measurement events, wherein each first measurement event corresponds to one measurement report; and
   sending the K first measurement reports that are in the N measurement reports and that correspond to a first trigger condition that the first measurement result satisfies, wherein the first trigger condition is one of trigger conditions that each type in the different types of measurement events satisfies; or
   obtaining the K first measurement reports corresponding to a first trigger condition that the first measurement result satisfies, wherein the first trigger condition is one of trigger conditions that each type in the different types of measurement events satisfies; and
   sending the K first measurement reports corresponding to the first trigger condition that the first measurement result satisfies.

4. The method according to claim 2 or 3, wherein the first trigger condition comprises one of the following conditions:

   a first threshold that is in N first thresholds corresponding to the N first measurement events and that is closest to a flight altitude of the terminal device;

a largest first threshold in N first thresholds corresponding to the N first measurement events;

a smallest first threshold in N first thresholds corresponding to the N first measurement events;

a first threshold corresponding to a trigger condition with earliest configuration time; or

a first threshold corresponding to a trigger condition with a highest priority.

5. The method according to any one of claims 1 to 4, wherein the first measurement result comprises altitude information or altitude difference information.

6. The method according to any one of claims 1 to 5, wherein the first measurement event further comprises one or more second thresholds; and

the sending the K first measurement reports comprises:

when determining that the first measurement result satisfies the N first thresholds corresponding to the N first measurement events and that the one or more second measurement results satisfy the second threshold, sending the K first measurement reports.

7. The method according to claim 6, wherein the second measurement result is signal strength, and that the one or more second measurement results satisfy the second threshold comprises one of the following content:

signal strength of a neighboring cell is greater than signal strength of a serving cell of the terminal device;

signal strength of a neighboring cell is greater than a first value; or

signal strength of a serving cell is less than a second value, and signal strength of a neighboring cell is greater than a third value.

8. The method according to any one of claims 1 to 7, wherein before sending the K first measurement reports, the method further comprises:

applying a first measurement configuration, wherein the first measurement configuration comprises a correspondence between at least one third threshold and first information, the third threshold is an altitude threshold, and the first information comprises a triggered-cell quantity and/or a to-be-measured beam.

9. The method according to claim 8, wherein when the first measurement configuration comprises a plurality of third thresholds, the applying the first measurement configuration comprises one of the following content:

applying first information corresponding to a third threshold in the plurality of third thresholds that is closest to the flight altitude of the terminal device;

applying first information corresponding to a largest first threshold in the plurality of third thresholds;

applying first information corresponding to a smallest first threshold in the plurality of third thresholds;

first information corresponding to a third threshold with earliest configuration time; or

first information corresponding to a third threshold with a highest priority.

10. The method according to claim 9, wherein the sending the K first measurement reports comprises:

when determining that the first measurement result satisfies the N first thresholds corresponding to the N first measurement events and that a quantity of cells in a triggered-cell list is greater than or equal to the triggered-cell quantity, and/or

when determining that the first measurement result satisfies the N first thresholds corresponding to the N first measurement events, measuring the to-be-measured beam, and sending the K first measurement reports.

11. The method according to any one of claims 1 to 10, wherein the first threshold comprises one of the following content:

an altitude threshold corresponding to the first measurement event;

a sum of an altitude threshold corresponding to the first measurement event and a hysteresis value, or a difference of the altitude threshold corresponding to the first measurement event minus the hysteresis value;

a sum of an altitude threshold corresponding to the first measurement event and an offset value; or

a sum of an altitude threshold corresponding to the first measurement event and an offset value, plus a hysteresis value; or the sum of the altitude threshold corresponding to the first measurement event and the offset value, minus the hysteresis value.

12. The method according to any one of claims 1 to 11, wherein the first configuration information is initially configured configuration information or reconfigured configuration information.

**13.** The method according to any one of claims 2 to 4, wherein the first configuration information further comprises first indication information, and the first indication information indicates the terminal device to determine the first trigger condition.

**14.** A communication method, wherein the method is applied to a network device, and the method comprises:

sending first configuration information to a terminal device, wherein the first configuration information comprises M first measurement events, and the first measurement event comprises a first threshold; and
receiving K first measurement reports, wherein the K first measurement reports are measurement reports corresponding to K first measurement events in N first measurement events in the M first measurement events that a first measurement result satisfies, N is greater than or equal to 2, and K is less than or equal to 2, wherein when K is equal to 2, the N first measurement events comprise different types of measurement events, N is greater than or equal to 3, and the K first measurement reports are measurement reports corresponding to the different types of measurement events.

**15.** The method according to claim 14, wherein the first measurement event further comprises one or more second thresholds.

**16.** The method according to claim 14 or 15, wherein the first configuration information further comprises a first measurement configuration, the first measurement configuration comprises a correspondence between at least one third threshold and first information, the third threshold is an altitude threshold, and the first information comprises a triggered-cell quantity and/or a to-be-measured beam.

**17.** The method according to any one of claims 14 to 16, wherein the first threshold comprises one of the following content:

an altitude threshold corresponding to the first measurement event;
a sum of an altitude threshold corresponding to the first measurement event and a hysteresis value, or a difference of the altitude threshold corresponding to the first measurement event minus the hysteresis value;
a sum of an altitude threshold corresponding to the first measurement event and an offset value; or
a sum of an altitude threshold corresponding to the first measurement event and an offset value, plus a hysteresis value; or the sum of the altitude threshold corresponding to the first measurement event and the offset value, minus the hysteresis value.

**18.** The method according to any one of claims 14 to 17, wherein the first configuration information further comprises first indication information, the first indication information indicates the terminal device to determine a first trigger condition, and the first trigger condition is a trigger condition corresponding to sending the K first measurement events by the terminal.

**19.** A communication method, comprising:

receiving second configuration information from a network device, wherein the second configuration information comprises a target measurement event, and the target measurement event is a measurement event triggered based on a relationship between altitude difference information and threshold information; and
when the target measurement event satisfies a trigger condition, sending a measurement report of the target measurement event.

**20.** The method according to claim 19, wherein the target measurement event comprises a second measurement event and/or a third measurement event, the second measurement event is a measurement event triggered when an altitude difference of the terminal device is greater than a first threshold, and the third measurement event is a measurement event triggered when the altitude difference of the terminal device is less than a second threshold.

**21.** The method according to claim 19 or 20, wherein the altitude difference information is a difference of a first altitude minus a second altitude of the terminal device, the first altitude is an altitude of the terminal device at a first moment, and the second altitude is an altitude of the terminal device at a second moment.

**22.** The method according to claim 21, wherein the second configuration information comprises the second altitude, or the second altitude is an altitude at which the terminal device receives the second configuration information.

**23.** A communication method, comprising:

sending second configuration information to a terminal device, wherein the second configuration information comprises a target measurement event, and the target measurement event is a measurement event triggered based on a relationship between altitude difference information and threshold information; and
receiving a measurement report of the target measurement event from the terminal device.

24. The method according to claim 23, wherein the target measurement event comprises a second measurement event and/or a third measurement event, the second measurement event is a measurement event triggered when an altitude difference of the terminal device is greater than a first threshold, and the third measurement event is a measurement event triggered when the altitude difference of the terminal device is less than a second threshold.

25. The method according to claim 23 or 24, wherein the altitude difference information is a difference of a first altitude minus a second altitude of the terminal device, the first altitude is an altitude of the terminal device at a first moment, and the second altitude is an altitude of the terminal device at a second moment.

26. The method according to claim 25, wherein the second configuration information comprises the second altitude, or the second altitude is an altitude at which the terminal device receives the second configuration information.

27. A communication apparatus, comprising a unit configured to perform the communication method according to any one of claims 1 to 13, comprising a unit configured to perform the communication method according to any one of claims 14 to 18, comprising a unit configured to perform the communication method according to any one of claims 19 to 22, or comprising a unit configured to perform the communication method according to any one of claims 23 to 26.

28. A communication apparatus, comprising:
a processor, configured to execute a computer program stored in a memory, to cause the apparatus to perform the communication method according to any one of claims 1 to 13, to cause the apparatus to perform the method according to any one of claims 14 to 18, to cause the apparatus to perform the method according to any one of claims 19 to 22, or to cause the apparatus to perform the method according to any one of claims 23 to 26.

29. A computer-readable storage medium, wherein the computer-readable storage medium stores a computer program; and when the computer program is run on a computer, the computer is caused to perform the method according to any one of claims 1 to 26.

30. A chip, comprising at least one processor and a communication interface, wherein the communication interface is configured to: receive data and/or information; and transmit the received data and/or information to the processor, and the processor processes the data and/or the information, to perform the communication method according to any one of claims 1 to 26.

31. A communication system, wherein the communication system comprises a terminal device and a network device; wherein

the terminal device is configured to perform the communication method according to any one of claims 1 to 13, or the terminal device is configured to perform the communication method according to any one of claims 19 to 22; and
the network device is configured to perform the communication method according to any one of claims 14 to 18, or the network device is configured to perform the communication method according to any one of claims 23 to 26.

FIG. 1

Altitude

Threshold of
third event
H1 ——————— 300 m

Threshold of
second event
H1 ——————— 200 m

Threshold of
first event H1 ——————— 100 m

FIG. 2

300

| Terminal device | | Network device |

310: First configuration information, where the first configuration information includes M first measurement events

320: Send a first measurement report when determining that a first measurement result satisfies trigger conditions for N first measurement events in the M first measurement events

330: Make a decision based on the first measurement report

FIG. 3

400

```
┌─────────────┐                    ┌─────────────┐
│  Terminal   │                    │   Network   │
│   device    │                    │   device    │
└─────────────┘                    └─────────────┘
       │                                  │
       │◄── 410: Second configuration information, ──
       │    including a target measurement event
       │                                  │
       │   420: Send a measurement report of the
       │   target measurement event when the      ──►
       │   target measurement event satisfies a
       │   trigger condition
       │                                  │
       │                          ┌─────────────────┐
       │                          │ 430: Make a decision │
       │                          │    based on the      │
       │                          │ measurement report   │
       │                          └─────────────────┘
       │                                  │
```

FIG. 4

500

```
┌──────────────┐        ┌─────────────┐              ┌─────────────┐
│   Another    │        │  Terminal   │              │   Network   │
│terminal device│       │  device 1   │              │   device    │
└──────────────┘        └─────────────┘              └─────────────┘
      │                        │                            │
      │                        │◄── 510: Second information, ──
      │                        │    indicating a type of a
      │                        │ communication mode supported
      │                        │    by the network device
      │                        │                            │
┌─────────────────────────────────────┐                    │
│ 520: Communicate with the another terminal │              │
│ device in a target communication mode based│              │
│       on the second information            │              │
└─────────────────────────────────────┘                    │
      │                        │                            │
```

FIG. 5

10

Transceiver module 11

Processing module 12

Storage module 13

FIG. 6

## INTERNATIONAL SEARCH REPORT

| International application No. |
| --- |
| **PCT/CN2024/120348** |

| A. | CLASSIFICATION OF SUBJECT MATTER |
| --- | --- |

H04W24/02(2009.01)i

According to International Patent Classification (IPC) or to both national classification and IPC

| B. | FIELDS SEARCHED |
| --- | --- |

Minimum documentation searched (classification system followed by classification symbols)

IPC: H04W24/-, H04W64/-

Documentation searched other than minimum documentation to the extent that such documents are included in the fields searched

Electronic data base consulted during the international search (name of data base and, where practicable, search terms used)

CNABS, CNTXT, CNKI, 万方, WANFANG: 无人机, 测量, 报告, 高度, 阈值, 触发, 间隔, 数量; VEN, ENTXT, 3GPP: uncrewed, unmanned, aerial vehicle, measurement, report, height, threshold, trigger, interval, amount, frequent, H1, H2, drone, UAV, altitude, TTT

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | ERICSSON. "Remaining aspects for height-based triggering, R2-1807258" *3GPP TSG-RAN WG2 #102*, 25 May 2018 (2018-05-25), sections 1 and 2 | 19-31 |
| Y | ERICSSON. "Remaining aspects for height-based triggering, R2-1807258" *3GPP TSG-RAN WG2 #102*, 25 May 2018 (2018-05-25), sections 1 and 2 | 1-18, 27-31 |
| Y | ERICSSON. "Controlling the amount of measurement reporting, R2-1807257" *3GPP TSG-RAN WG2 #102*, 25 May 2018 (2018-05-25), section 2 | 1-18, 27-31 |
| A | CN 109561448 A (NTT DOCOMO INC.) 02 April 2019 (2019-04-02) entire description | 1-31 |
| A | Huawei et al. "Discussion on New Measurement Events for Drones, R2-1812082" *3GPP TSG-RAN WG2 Meeting #103*, 24 August 2018 (2018-08-24), entire document | 1-31 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **12 October 2024** | **28 November 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

International application No.

**PCT/CN2024/120348**

| Patent document cited in search report | | | Publication date (day/month/year) | Patent family member(s) | | | Publication date (day/month/year) |
|---|---|---|---|---|---|---|---|
| CN | 109561448 | A | 02 April 2019 | JP | 2020535742 | A | 03 December 2020 |
| | | | | JP | 7271525 | B2 | 11 May 2023 |
| | | | | US | 2020229015 | A1 | 16 July 2020 |
| | | | | US | 11122456 | B2 | 14 September 2021 |
| | | | | WO | 2019062750 | A1 | 04 April 2019 |
| | | | | EP | 3691325 | A1 | 05 August 2020 |
| | | | | EP | 3691325 | A4 | 10 November 2021 |
| | | | | CN | 111133788 | A | 08 May 2020 |
| | | | | CN | 111133788 | B | 23 February 2024 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311292698